# EUROPEAN PATENT APPLICATION

(11) **EP 4 832 458 A1**
(43) Date of publication of application: **28.10.2026**
(21) Application number: 24916412.0
(22) Date of filing: 02.09.2024
(51) Int. Cl.: H04L 67/303

(54) **COMMUNICATION METHOD, COMPUTING DEVICE, AND COMPUTING SYSTEM**

(30) Priority: 12.01.2024 CN 202410053846
(71) Applicant: Huawei Technologies Co., Ltd., Shenzhen, Guangdong 518129 (CN)
(72) Inventor: HAN, Zhaojiao, Shenzhen, Guangdong 518129 (CN); CHENG, Chuanning, Shenzhen, Guangdong 518129 (CN); GUO, Jian, Shenzhen, Guangdong 518129 (CN); QIU, Zhenfa, Shenzhen, Guangdong 518129 (CN); XIONG, Liudong, Shenzhen, Guangdong 518129 (CN)
(74) Representative: Goddar, Heinz J.
(86) International application number: PCT/CN2024/116261
(87) International publication number: WO 2025/148360

(57) **Abstract**

This application provides a communication method, applied to a first physical node. The first physical node includes a first processing unit and a first I/O die. The first processing unit is configured to create a first compute instance, the first I/O die is configured to create a first communication entity instance for the first compute instance, an identifier of the first communication entity instance is a first EID, the first I/O die includes at least one first port, the at least one first port respectively corresponds to at least one first network address, and the first I/O die corresponds to a fourth network address. Through a two-layer identifier design based on an EID and network addresses, communication objects on at least one physical node can be uniformly identified as peer communication objects based on the EID. In addition, the network address indicates a location of the physical node in an interconnect network. In this way, a communication bandwidth between physical nodes (including a host and a device node) can be extended through a plurality of I/O die ports.

## Description

This application claims priority to Chinese Patent Application No. 202410053846.5, filed with the China National Intellectual Property Administration on January 12, 2024 and entitled "COMMUNICATION METHOD, COMPUTE APPARATUS, AND COMPUTING SYSTEM", which is incorporated herein by reference in its entirety.

### TECHNICAL FIELD

This application relates to the field of computer technologies, and in particular, to a communication method, a compute apparatus, and a computing system.

### BACKGROUND

The primary performance bottleneck of a high-performance computing system lies in memory bandwidth. The demand for extreme computational power from applications drives the memory bandwidth of each compute node from several tens of gigabytes per second (gigabytes per second, GB/s) in the double data rate (double data rate, DDR) era to hundreds of GB/s or even several terabytes per second (terabytes per second, TB/s) in the high-bandwidth memory (high-bandwidth memory, HBM) era. For example, an artificial intelligence (artificial intelligence, AI) task may be deployed on a system with up to thousands of compute nodes running in parallel, where extremely high data access requirements exist between the compute nodes, and the interconnection bandwidth specification between the nodes needs to match memory bandwidths within the compute nodes.

Specifically, the compute node generally includes a system on a chip (system on a chip, SoC) and a memory. The SoC may be but is not limited to a central processing unit (central processing unit, CPU), a neural processing unit (neural processing unit, NPU), a graphics processing unit (graphics processing unit, GPU). The memory may be a DDR and/or an HBM. Supporting more interconnect port links on the SoC chip can enhance the interconnect bandwidth specification. However, if the design or manufacturing requirements of the chip are exceeded, the objective needs to be achieved by integrating one or more input/output dies (I/O dies). Therefore, how to utilize one or more I/O dies and multiple port links to satisfy the bandwidth requirements of applications has become an urgent problem to be resolved.

### SUMMARY

This application provides a communication method, to meet bandwidth requirements of applications by utilizing one or more I/O dies.

According to a first aspect, a communication method is provided, and is applied to a first physical node. The method may be performed by the first physical node, or may be performed by a circuit or a chip configured in the first physical node. This is not limited in this application. For ease of description, the following uses an example in which the first physical node performs the method for description. The first physical node includes a first processing unit and a first I/O die. The first processing unit is configured to create a first compute instance, and the first I/O die is configured to create a first communication entity instance for the first compute instance.

The communication method includes: The first I/O die receives a first operation instruction, where the first operation instruction instructs to access a memory of a second compute instance in a second physical node, the second physical node includes a second processing unit and a second I/O die, the second processing unit is configured to create the second compute instance, the second I/O die is configured to create a second communication entity instance for the second compute instance, an identifier of the first communication entity instance is a first entity identifier EID, the first I/O die includes at least one first port, the at least one first port respectively corresponds to at least one first network address, an identifier of the second communication entity instance is a second EID, the second I/O die includes at least one second port, the at least one second port respectively corresponds to at least one second network address, the second I/O die corresponds to a third network address, the first I/O die corresponds to a fourth network address, and the at least one first port and the at least one second port are connected to at least one switching plane; and the first I/O die generates at least one first packet according to the first operation instruction, where the at least one first packet is sent to the second physical node through the at least one switching plane, and the first EID, the at least one first network address, the second EID, the at least one second network address, the third network address, and the fourth network address are used to determine a transmission path of the at least one first packet.

Based on the foregoing technical solution, the first physical node serves as a source device, and the second physical node serves as a target device. In some bus systems, when a packet is transmitted between a source device and a target device, the packet may be transmitted through a plurality of transmission paths. Specifically, in this technical solution, one physical node includes at least one I/O die, each I/O die includes at least one port, one network address (network address, NA) is allocated to each port, and network addresses of a plurality of ports of a same I/O die may be different or the same. In addition, one network address may be allocated to each I/O die on one physical node, and the network address of the port and the network address of the I/O die are uniformly addressed, in other words, the network addresses are defined as two levels: the port and the I/O die, and are uniformly addressed in one address space. In addition, the I/O die provides a corresponding communication entity instance for a communication object (for example, a compute/device function instance, where each compute/device function instance is a communication object during communication) of the physical node. An EID is allocated to each communication entity instance, and the EID may uniquely represent a corresponding communication object, that is, the EID may be used as a communication object identifier. Through a two-layer identifier design based on an EID and network addresses (for example, the network address of the I/O die and the network address of the port on the I/O die), communication objects on at least one physical node can be uniformly identified as peer communication objects based on the EID. In addition, the network address indicates a location of the physical node in an interconnect network. In this way, a communication bandwidth between physical nodes (including a host and a device node) can be extended through a plurality of I/O die ports.

In addition, single-stream multi-path packet transmission is supported. For example, data of one access transaction (for example, a memory read or write operation) may be divided into at least one packet, and a plurality of packets may be transmitted in parallel on a plurality of port links.

With reference to the first aspect, in some implementations of the first aspect, the first physical node further includes a third I/O die, the third I/O die corresponds to the fourth network address, the third I/O die is configured to create a third communication entity instance for the first compute instance, an identifier of the third communication entity instance is the first EID, the third I/O die includes at least one third port, and the at least one third port respectively corresponds to at least one fifth network address. The method further includes: The third I/O die receives a second operation instruction, where the second operation instruction instructs to access the memory of the second compute instance; and the third I/O die generates at least one second packet according to the second operation instruction, where the at least one third port is connected to the at least one switching plane, the at least one second packet is sent to the second physical node through the at least one switching plane, and the first EID, the at least one first network address, the second EID, the at least one second network address, the at least one fifth network address, the third network address, and the fourth network address are used to determine a transmission path of the at least one second packet and the transmission path of the at least one first packet.

Based on the foregoing technical solution, if a same physical node includes a plurality of I/O dies, network addresses of the plurality of I/O dies on the same physical node may be the same, and network addresses of a plurality of ports on different I/O dies are different, a multi-I/O die technology supports obtaining an ultra-large bandwidth between any physical nodes by stacking I/O dies and ports.

In addition, a same EID is configured for a plurality of communication entity instances on different I/O dies on one physical node. It may be understood that different communication entity instances are aggregated into one virtual communication entity instance, one virtual communication entity instance may be bound to one communication object for use, and one virtual communication entity instance may use a plurality of I/O dies and a plurality of ports in parallel for communication. That is, a plurality of communication objects on one physical node may share one network address for communication, and one communication object may use a plurality of network addresses of a physical node in which the communication object is located for communication, thereby improving a communication bandwidth.

With reference to the first aspect, in some implementations of the first aspect, the first physical node further includes a scheduler module, and the method further includes: The scheduler module splits an operation instruction into the first operation instruction and the second operation instruction; and the scheduler module sends the first operation instruction to the first I/O die, and sends the second operation instruction to the third I/O die.

Based on the foregoing technical solution, if a same physical node includes a plurality of I/O dies, a scheduler (scheduler) module may be arranged on a sending physical node, to split one operation instruction into a plurality of instructions and distribute the plurality of instructions to the plurality of I/O dies for parallel execution, thereby improving processing efficiency.

With reference to the first aspect, in some implementations of the first aspect, the second physical node further includes a fourth I/O die, the fourth I/O die corresponds to the third network address, the fourth I/O die is configured to create a fourth communication entity instance for the second compute instance, an identifier of the fourth communication entity instance is the second EID, the fourth I/O die includes at least one fourth port, the at least one fourth port respectively corresponds to at least one sixth network address, and the at least one fourth port is connected to the at least one switching plane; and the first EID, the at least one first network address, the second EID, the at least one second network address, the at least one fifth network address, the at least one sixth network address, the third network address, and the fourth network address are used to determine a transmission path of a packet.

With reference to the first aspect, in some implementations of the first aspect, a destination table and a first routing table are configured for the first I/O die, the destination table includes a first destination table entry, the first destination table entry includes the second EID and the third network address corresponding to the second EID, the first routing table includes a first default routing table entry, and the first default routing table entry indicates the at least one first port of the first I/O die; and the destination table and a third routing table are configured for the third I/O die, the third routing table includes a third default routing table entry, and the third default routing table entry indicates the at least one third port of the third I/O die.

Based on the foregoing technical solution, the destination table and a routing table are configured for each I/O die at a transmitter, to support packet transmission.

With reference to the first aspect, in some implementations of the first aspect, if the at least one switching plane includes a plurality of switching planes and the first physical node is incapable of transmitting a packet to the second physical node through a first switching plane among the plurality of switching planes, the first routing table further includes a first routing table entry, where the first routing table entry includes the third network address and a first port corresponding to the third network address, the third routing table further includes a third routing table entry, and the third routing table entry includes the third network address and a third port corresponding to the third network address; the first port corresponding to the third network address is a port, among the at least one first port of the first I/O die, that is usable to transmit a packet to the second physical node through a switching plane other than the first switching plane among the plurality of switching planes; and the third port corresponding to the third network address is a port, among the at least one third port of the third I/O die, that is usable to transmit a packet to the second physical node through the switching plane other than the first switching plane among the plurality of switching planes.

Based on the foregoing technical solution, when a switching plane cannot support packet transmission, a routing table entry may be designed, so that a packet is transmitted from a switching plane that supports packet transmission, thereby avoiding a packet transmission failure.

With reference to the first aspect, in some implementations of the first aspect, an identifier of a destination communication entity instance of the first operation instruction is the second EID. The method further includes: The first I/O die and the third I/O die determine, by querying the destination table based on the second EID, that a destination network address is the third network address; the first I/O die determines, by querying the routing table based on the third network address, the at least one first port for sending the at least one first packet; and the third I/O die determines, by querying the third routing table based on the third network address, the at least one third port for sending the at least one second packet.

Based on the foregoing technical solution, each packet on a link carries a communication object identifier and information about the memory operation instruction, and processing of each packet by an I/O die at a receiver does not need to depend on other packet information of an operation instruction to which the packet belongs.

With reference to the first aspect, in some implementations of the first aspect, the method further includes: The first I/O die determines, based on a load status of the at least one first port, to transmit the at least one first packet through a part or all of the at least one first port; and the third I/O die determines, based on a load status of the at least one third port, to transmit the at least one second packet through a part or all of the at least one third port.

Based on the foregoing technical solution, an I/O die at the transmitter performs load balancing by slicing a memory operation instruction based on a quantity of local ports.

With reference to the first aspect, in some implementations of the first aspect, when the second compute instance is migrated to a third physical node, the first destination table entry is updated to a second destination table entry, where the second destination table entry includes the second EID and a seventh network address corresponding to the second EID, and the seventh network address is a network address allocated to an I/O die on the third physical node.

Based on the foregoing technical solution, the communication object identifier and the network address are decoupled hierarchically, the communication object identifier represents a communication object, a location of the communication object may be migrated between different physical nodes, and the communication object identifier also moves accordingly. When the communication object is migrated to another physical node, only a corresponding destination table entry needs to be updated on a related physical node, thereby simplifying a packet transmission process.

With reference to the first aspect, in some implementations of the first aspect, a destination table and a first routing table are configured for the first I/O die, the destination table includes a first destination table entry, the first destination table entry includes the second EID and the at least one second network address corresponding to the second EID, the first routing table includes at least one second routing table entry, the at least one second routing table entry corresponds to the at least one second port of the second I/O die and/or the at least one fourth port of the fourth I/O die, and each second routing table entry includes a second network address of a corresponding second port and/or a sixth network address of a corresponding fourth port and identifiers of one or more first ports in the at least one first port; and the destination table and a third routing table are configured for the third I/O die, the third routing table includes at least one fourth routing table entry, the at least one fourth routing table entry corresponds to the at least one second port of the second I/O die and/or the at least one fourth port of the fourth I/O die, and each fourth routing table entry includes a second network address of a corresponding second port and/or a sixth network address of a corresponding fourth port and identifiers of one or more third ports in the at least one third port.

Based on the foregoing technical solution, the destination table and a routing table are configured for each I/O die at a transmitter, to support packet transmission.

With reference to the first aspect, in some implementations of the first aspect, identifiers of destination communication entity instances of the first operation instruction and the second operation instruction are the second EID. The method further includes: The first I/O die and the third I/O die determine, by querying the destination table based on the second EID, that a destination network address is a second network address of the at least one second port of the second I/O die and/or a sixth network address of the at least one fourth port of the fourth I/O die; and the first I/O die determines, by querying the first routing table based on the second network address of the at least one second port and/or the sixth network address of the at least one fourth port, the at least one first port for sending the at least one first packet; and the third I/O die determines, by querying the third routing table based on the second network address of the at least one second port and/or the sixth network address of the at least one fourth port, the at least one third port for sending the at least one second packet.

Based on the foregoing technical solution, each packet on a link carries a communication object identifier and information about a memory operation instruction, and processing of each packet by an I/O die at a receiver does not need to depend on other packet information of an operation instruction to which the packet belongs.

With reference to the first aspect, in some implementations of the first aspect, the method further includes: The first I/O die and the third I/O die determine, based on a quantity of second network addresses and/or a quantity of sixth network addresses in the destination table, to transmit a packet through a part or all of the at least one second port of the second I/O die and/or the at least one fourth port of the fourth I/O die. Further, the first I/O die determines, based on a load status of the at least one first port, to transmit the at least one first packet through a part or all of the at least one first port; and the third I/O die determines, based on a load status of the at least one third port, to transmit the at least one second packet through a part or all of the at least one third port.

Based on the foregoing technical solution, an I/O die at the transmitter performs load balancing by slicing a memory operation instruction based on a quantity of local ports or a quantity of network addresses in the destination table.

With reference to the first aspect, in some implementations of the first aspect, when the second compute instance is migrated to a third physical node, the first destination table entry is updated to a second destination table entry, where a second network address and/or a sixth network address in each second routing table entry and the second network address and/or the sixth network address in the fourth routing table entry are updated to network addresses allocated to a port of an I/O die on the third physical node, the second destination table entry includes the second EID and an eighth network address corresponding to the second EID, and the eighth network address is a network address allocated to the port of the I/O die on the third physical node.

Based on the foregoing technical solution, when a communication object is migrated to another physical node, only a corresponding destination table entry needs to be updated on a related physical node, thereby simplifying a packet transmission process.

According to a second aspect, a communication method is provided, and is applied to a second physical node. The method may be performed by the second physical node, or may be performed by a circuit or a chip configured in the second physical node. This is not limited in this application. For ease of description, the following uses an example in which the second physical node performs the method for description. The second physical node includes a second processing unit and a second I/O die. The second processing unit is configured to create a second compute instance, and the second I/O die is configured to create a second communication entity instance for the second compute instance.

The communication method includes: The second I/O die receives at least one first packet from a first physical node, where the at least one first packet is used to access a memory of the second compute instance, the first physical node includes a first processing unit and a first input/output I/O die, the first processing unit is configured to create a first compute instance, and the first I/O die is configured to create a first communication entity instance for the first compute instance, where an identifier of the first communication entity instance is a first entity identifier EID, the first I/O die includes at least one first port, the at least one first port respectively corresponds to at least one first network address, an identifier of the second communication entity instance is a second EID, the second I/O die includes at least one second port, the at least one second port respectively corresponds to at least one second network address, the second I/O die corresponds to a third network address, the first I/O die corresponds to a fourth network address, and the at least one first port and the at least one second port are connected to at least one switching plane; and the second I/O die accesses the memory of the second compute instance in response to the at least one first packet, where one or more of the first EID, the at least one first network address, the second EID, the at least one second network address, the third network address, and the fourth network address are used to determine a transmission path of the at least one first packet.

With reference to the second aspect, in some implementations of the second aspect, the first physical node further includes a third I/O die, the third I/O die corresponds to the fourth network address, the third I/O die is configured to create a third communication entity instance for the first compute instance, an identifier of the third communication entity instance is the first EID, the third I/O die includes at least one third port, and the at least one third port respectively corresponds to at least one fifth network address. The method further includes: The second I/O die receives at least one second packet from the first physical node, where the at least one second packet is used to access the memory of the second compute instance, and the first EID, the at least one first network address, the second EID, the at least one second network address, the at least one fifth network address, the third network address, and the fourth network address are used to determine a transmission path of the at least one second packet and the transmission path of the at least one first packet.

With reference to the second aspect, in some implementations of the second aspect, the second physical node further includes a fourth I/O die, the fourth I/O die corresponds to the third network address, the fourth I/O die is configured to create a fourth communication entity instance for the second compute instance, an identifier of the fourth communication entity instance is the second EID, the fourth I/O die includes at least one fourth port, the at least one fourth port respectively corresponds to at least one sixth network address, and the at least one fourth port is connected to the at least one switching plane; and the first EID, the at least one first network address, the second EID, the at least one second network address, the at least one fifth network address, the at least one sixth network address, the third network address, and the fourth network address are used to determine a transmission path of a packet.

With reference to the second aspect, in some implementations of the second aspect, a first page table is configured for the second compute instance, page table entries are configured for the second I/O die and the fourth I/O die, the page table entry includes a first page table entry item, and the first page table entry item includes the second EID and a start address of the first page table corresponding to the second EID.

Based on the foregoing technical solution, a communication object has one page table entry item on each I/O die at a receiver, and page table entry items of a plurality of I/O dies point to a same page table. An I/O die at the receiver uses a destination communication object identifier as a memory page table entry index. The receiver allows a plurality of memory page table entries to exist, and the plurality of memory page table entries may correspond to a same memory page table. The I/O die at the receiver may query a memory page table entry and a memory page table based on information carried in a received packet, to obtain a local memory address, and perform a read/write operation.

With reference to the second aspect, in some implementations of the second aspect, identifiers of destination communication entity instances of the at least one first packet and the at least one second packet are the second EID, and the second I/O die and the fourth I/O die accessing the memory of the second compute instance in response to the at least one first packet and the at least one second packet includes: The second I/O die and the fourth I/O die determine, by querying the page table entry based on the identifiers of the destination communication entity instances of the at least one first packet and the at least one second packet, the start address of the first page table; and the second I/O die and the fourth I/O die determine, by querying the first page table based on the start address of the first page table, a physical address of a to-be-accessed memory space, and initiate a memory read or write operation via the physical address.

For technical effect of the method shown in the second aspect and the possible designs of the second aspect, refer to the technical effect in the first aspect and the possible designs of the first aspect.

According to a third aspect, a communication method is provided, and is applied to a first physical node. The method may be performed by the first physical node, or may be performed by a circuit or a chip configured in the first physical node. This is not limited in this application. For ease of description, the following uses an example in which the first physical node performs the method for description. The first physical node includes a first processing unit and a plurality of first I/O dies. The first processing unit is configured to create a first compute instance, and the plurality of I/O dies are configured to create a plurality of first communication entity instances for the first compute instance.

The communication method includes: The plurality of first I/O dies respectively receive operation instructions, where the operation instruction instructs to access a memory of a second compute instance in a second physical node, the second physical node includes a second processing unit and a plurality of second I/O dies, the second processing unit is configured to create the second compute instance, and the plurality of second I/O dies are respectively configured to create a plurality of second communication entity instances for the second compute instance, where identifiers of the plurality of first communication entity instances are all a first entity identifier EID, the plurality of first I/O dies include a plurality of first ports, the plurality of first ports respectively correspond to a plurality of first network addresses, identifiers of the plurality of second communication entity instances are all a second EID, the plurality of second I/O dies include a plurality of second ports, the plurality of second ports respectively correspond to a plurality of second network addresses, network addresses of the plurality of second I/O dies are all third network addresses, network addresses of the plurality of first I/O dies are all fourth network addresses, and the plurality of first ports and the plurality of second ports are connected to at least one switching plane; and the plurality of first I/O dies respectively generate a plurality of first packets according to the received operation instructions, where the plurality of first packets are sent to the second physical node through the at least one switching plane, and the first EID, the plurality of first network addresses, the second EID, the plurality of second network addresses, the third network address, and the fourth network address are used to determine a transmission path of at least one first packet.

Based on the foregoing technical solution, the first physical node serves as a source device, and the second physical node serves as a target device. In some bus systems, when a packet is transmitted between a source device and a target device, the packet may be transmitted through a plurality of transmission paths. Specifically, in this technical solution, one physical node includes at least two I/O dies, each I/O die includes at least one port, one network address (network address, NA) is allocated to each port, and network addresses of a plurality of ports of a same I/O die may be different or the same. In addition, a network address may be allocated to each I/O die on a physical node, network addresses of a plurality of I/O dies on a same physical node are the same, and the network address of the port and the network address of the I/O die are uniformly addressed, in other words, the network addresses are defined as two levels: the port and the I/O die, and are uniformly addressed in one address space.

In addition, the I/O die provides a corresponding communication entity instance for a communication object (for example, a compute/device function instance, where each compute/device function instance is a communication object during communication) of the physical node. An EID is allocated to each communication entity instance, and the EID may uniquely represent a corresponding communication object, that is, the EID may be used as a communication object identifier. A same EID is configured for a plurality of communication entity instances on different I/O dies on one physical node, it may be understood that different communication entity instances are aggregated into one virtual communication entity instance, one virtual communication entity instance may be bound to one communication object for use, and one virtual communication entity instance may use a plurality of I/O dies and a plurality of ports in parallel for communication.

With reference to the third aspect, in some implementations of the third aspect, a destination table and a routing table are configured for each first I/O die, the destination table includes a first destination table entry, the first destination table entry includes the second EID and the third network address corresponding to the second EID, the routing table includes a default routing table entry, and the default routing table entry indicates at least one first port of each first I/O die.

With reference to the third aspect, in some implementations of the third aspect, if the at least one switching plane includes a plurality of switching planes and the first physical node is incapable of transmitting a packet to the second physical node through a first switching plane among the plurality of switching planes, the routing table further includes a first routing table entry, where the first routing table entry includes the third network address and a port corresponding to the third network address, and the port corresponding to the third network address is a port, among at least one first port of each first I/O die, and that is usable to transmit a packet to the second physical node through a switching plane other than the first switching plane among the plurality of switching planes.

With reference to the third aspect, in some implementations of the third aspect, an identifier of a destination communication entity instance of the operation instruction is the second EID. The method further includes: Each first I/O die determines, by querying the destination table based on the second EID, that a destination network address is the third network address; and each first I/O die determines, by querying the routing table based on the third network address, the at least one first port for sending the at least one first packet.

With reference to the third aspect, in some implementations of the third aspect, the method further includes: Each first I/O die determines, based on a load status of the at least one first port, to transmit the at least one first packet through a part or all of the at least one first port.

With reference to the third aspect, in some implementations of the third aspect, when the second compute instance is migrated to a third physical node, the first destination table entry is updated to a second destination table entry, where the second destination table entry includes the second EID and a seventh network address corresponding to the second EID, and the seventh network address is a network address allocated to an I/O die on the third physical node.

With reference to the third aspect, in some implementations of the third aspect, a destination table and a routing table are configured for each first I/O die, the destination table includes a first destination table entry, the first destination table entry includes the second EID and at least one second network address corresponding to the second EID, the routing table includes at least one second routing table entry, the at least one second routing table entry respectively corresponds to at least one second port of the second I/O die, and each second routing table entry includes a second network address of a corresponding second port and identifiers of one or more first ports in the at least one first port.

With reference to the third aspect, in some implementations of the third aspect, an identifier of a destination communication entity instance of the operation instruction is the second EID. The method further includes: Each first I/O die determines, by querying the destination table based on the second EID, that a destination network address is a second network address of the at least one second port of the second I/O die; and each first I/O die determines, by querying the routing table based on the at least one second network address, the at least one first port for sending the at least one first packet.

With reference to the third aspect, in some implementations of the third aspect, the method further includes: Each first I/O die determines, based on a quantity of second network addresses in the destination table, to transmit the at least one packet through a part or all of the at least one first port of the first I/O die; and each first I/O die determines, based on a load status of the at least one first port, to transmit the at least one first packet through the part or all of the at least one first port.

With reference to the third aspect, in some implementations of the third aspect, when the second compute instance is migrated to a third physical node, the first destination table entry is updated to a second destination table entry, and a second network address of a second port in each of the at least one second routing table entry is updated to a network address allocated to a port of an I/O die on the third physical node, where the second destination table entry includes the second EID and an eighth network address corresponding to the second EID, and the eighth network address is a network address allocated to the port of the I/O die on the third physical node.

For technical effect of the method shown in the third aspect and the possible designs of the third aspect, refer to the technical effect in the first aspect and the possible designs of the first aspect.

According to a fourth aspect, a communication method is provided, and is applied to a second physical node. The method may be performed by the second physical node, or may be performed by a circuit or a chip configured in the second physical node. This is not limited in this application. For ease of description, the following uses an example in which the second physical node performs the method for description. The second physical node includes a second processing unit and a plurality of second I/O dies. The second processing unit is configured to create a second compute instance, and the plurality of second I/O dies are respectively configured to create a plurality of second communication entity instances for the second compute instance.

The communication method includes: The plurality of second I/O dies respectively receive at least one first packet from a first physical node, where the at least one first packet is used to access a memory of the second compute instance, the first physical node includes a first processing unit and a plurality of first I/O dies, the first processing unit is configured to create a first compute instance, and the plurality of first I/O dies are respectively configured to create a plurality of first communication entity instances for the first compute instance, where identifiers of the first communication entity instances are all first entity identifiers EID, the plurality of first I/O dies include a plurality of first ports, the plurality of first ports respectively correspond to a plurality of first network addresses, identifiers of the plurality of second communication entity instances are all a second EID, the plurality of second I/O dies include a plurality of second ports, the plurality of second ports respectively correspond to a plurality of second network addresses, network addresses of the plurality of second I/O dies are all third network addresses, network addresses of the plurality of first I/O dies are all fourth network addresses, and the plurality of first ports and the plurality of second ports are connected to at least one switching plane; and the plurality of second I/O dies access the memory of the second compute instance in response to the at least one first packet, where the first EID, the plurality of first network addresses, the second EID, the plurality of second network addresses, the third network address, and the fourth network address are used to determine a transmission path of the at least one first packet.

With reference to the fourth aspect, in some implementations of the fourth aspect, a first page table is configured for the second compute instance, a page table entry is configured for each second I/O die, the page table entry includes a first page table entry item, and the first page table entry item includes the second EID and a start address of the first page table corresponding to the second EID.

With reference to the fourth aspect, in some implementations of the fourth aspect, an identifier of a destination communication entity instance of the at least one first packet is the second EID, and that each second I/O die accesses the memory of the second compute instance in response to the at least one first packet includes: Each second I/O die determines, by querying the page table entry based on the identifier of the destination communication entity instance of the at least one first packet, the start address of the first page table; and each second I/O die determines, by querying the first page table based on the start address of the first page table, a physical address of a to-be-accessed memory space, and initiates a memory read or write operation via the physical address.

For technical effect of the method shown in the fourth aspect and the possible designs of the fourth aspect, refer to the technical effect in the second aspect and the possible designs of the second aspect.

According to a fifth aspect, a compute apparatus is provided. The apparatus includes: a storage module, configured to store a program; and a processing module, configured to execute the program stored in the storage module. When the program stored in the storage module is executed, the processing module is configured to perform the methods provided in the foregoing aspects.

According to a sixth aspect, a computer-readable storage medium is provided. The computer-readable storage medium is configured to store program code executed by a device, and the program code includes instructions used to perform the methods provided in the foregoing aspects.

According to a seventh aspect, a computer program product including instructions is provided. When the computer program product is executed by a computer, the computer is caused to perform the methods provided in the foregoing aspects.

According to an eighth aspect, a chip is provided. The chip includes a processing module and a communication interface. The processing module reads, through the communication interface, instructions stored in a memory, to perform the methods provided in the foregoing aspects.

Optionally, in an implementation, the chip may further include a storage module. The storage module stores instructions. The processing module is configured to execute the instructions stored in the storage module. When the instructions are executed, the processing module is configured to perform the methods provided in the foregoing aspects.

According to a ninth aspect, a chip is provided. The chip is configured to perform the methods provided in the foregoing aspects.

According to a tenth aspect, a computer system is provided. The computer system includes the chip shown in the ninth aspect.

According to an eleventh aspect, a terminal device is provided. The terminal device includes the chip shown in the ninth aspect. For example, the terminal device includes but is not limited to a terminal like a mobile phone or a vehicle.

According to a twelfth aspect, a computing system is provided. The system includes a first physical node configured to perform the method provided in the first aspect and a second physical node configured to perform the method provided in the second aspect.

According to a thirteenth aspect, a computing system is provided. The system includes a first physical node configured to perform the method provided in the third aspect and a second physical node configured to perform the method provided in the fourth aspect.

### BRIEF DESCRIPTION OF DRAWINGS

FIG. 1 is a diagram of a structure of a computer device according to an embodiment of this application;
FIG. 2 is a diagram of a data center according to an embodiment of this application;
FIG. 3A to FIG. 3C are diagrams of scenarios in which hosts and devices are interconnected according to embodiments of this application;
FIG. 4A and FIG. 4B are diagrams of forms of physical nodes according to embodiments of this application;
FIG. 5 is a schematic flowchart of a communication method according to this application;
FIG. 6 is a diagram of communication between a first physical node and a second physical node according to this application;
FIG. 7 is another diagram of communication between a first physical node and a second physical node according to this application;
FIG. 8 is still another diagram of communication between a first physical node and a second physical node according to this application;
FIG. 9 is a diagram of aggregation of communication entity instances according to this application;
FIG. 10 is yet another diagram of communication between a first physical node and a second physical node according to this application;
FIG. 11 is a diagram of a structure of a compute apparatus 1100 according to an embodiment of this application;
FIG. 12 is a diagram of a structure of a chip system 1200 according to an embodiment of this application; and
FIG. 13 schematically shows a conceptual partial view of a computer program product according to an embodiment of this application.

### DESCRIPTION OF EMBODIMENTS

For ease of understanding of embodiments of this application, the following several points are described.

First, "at least one" shown in this application means one or more, and "a plurality of" means two or more. In addition, in embodiments of this application, "first", "second", and various numeric numbers (for example, "#1" and "#2") are merely used for distinguishing for ease of description, and are not used to limit the scope of embodiments of this application. Sequence numbers in the following processes do not mean an execution sequence. The execution sequence of the processes should be determined based on functions and internal logic of the processes, and should not constitute any limitation on implementation processes of embodiments of this application. It should be understood that objects described in this way may be interchangeable in proper cases, so that solutions other than embodiments of this application can be described. In addition, in embodiments of this application, words such as "S510" are merely identifiers for ease of description, and do not limit a sequence of performing steps.

Second, in embodiments of this application, the words such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

Third, "storage" in embodiments of this application may be storage in one or more memories. The one or more memories may be separately disposed, or may be integrated into an encoder, a decoder, a processor, or a compute apparatus. Alternatively, some of the one or more memories may be separately disposed, and some may be integrated into a decoder, a processor, or a compute apparatus. A type of the memory may be a storage medium in any form. This is not limited in this application.

Fourth, in embodiments of this application, a term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their combinations not excluded.

Fifth, "if" in embodiments of this application may be explained as a meaning of "when" ("when" or "upon"), "in response to determining", or "in response to detecting". Similarly, based on the context, a phrase "if determining" or "if detecting (a stated condition or event)" may be explained as a meaning of "when determining", "in response to determining", "when detecting (the stated condition or event)", or "in response to detecting (the stated condition or event)".

Sixth, in embodiments of this application, the terms used in the descriptions of the various examples are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

Seventh, a term "and/or" in this specification is only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

The following describes technical solutions in embodiments of this application with reference to accompanying drawings.

In this application, a processor in a computer system accesses a configuration space of an external device. The computer system may be a server or a terminal. The terminal includes but is not limited to user systems such as a desktop computer, a notebook computer, and a smartphone. For ease of understanding, the following describes a structure of the computer system.

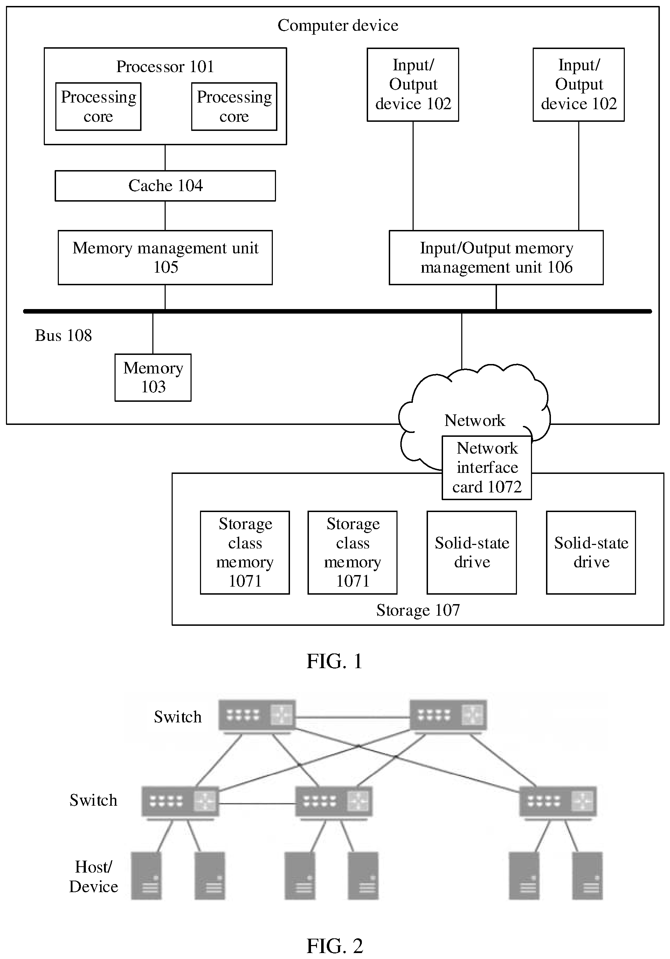

FIG. 1 is a diagram of a structure of a computer system. The computer system includes a processor 101, an input/output device (input/output device, I/O device) 102, a memory 103, a cache 104, a memory management unit (memory management unit, MMU) 105, an input/output memory management unit (input/output memory management unit, IOMMU) 106, a storage 107, and a bus 108.

The processor 101 includes at least one core (core). The core is also referred to as a computing engine. Each core may independently execute a task. When the processor 101 includes a plurality of cores, tasks from an application may be classified, so that the application can make full use of the plurality of cores to execute more tasks within specific time. In this embodiment, the processor 101 may be a main processor, for example, a central processing unit (Central Processing Unit, CPU).

The input/output device 102 is a hardware device that has a data input capability and/or a data output capability. The input/output device 102 may be divided into an input device and an output device. The input device may include a device like a mouse, a keyboard, a joystick, a stylus, or a microphone, and the output device may include a device like a display or a speaker.

The memory 103 is also referred to as an internal memory or a main memory, and is configured to temporarily store operation data in the processor 101. Further, the memory 103 is further configured to temporarily store data exchanged with the storage 107. The memory 103 may be generally implemented by using a storage medium like a dynamic random access memory DRAM or a static random access memory (static random access memory, SRAM).

The cache 104 (in this embodiment, the cache is a processor cache, for example, a CPU cache) is a component configured to reduce average time required for the processor 101 to access the memory 103. Refer to FIG. 1. In a pyramid storage system, the cache 104 is located at a second layer from top to bottom, is only lower than a register (not shown in FIG. 1) of the processor 101, and is higher than the memory 103 (the memory 103 is located at a third layer from top to bottom). Generally, a capacity of the cache 104 is far less than that of the memory 103, but an access speed may be close to a frequency of the processor 101.

The memory management unit 105 is computer hardware configured to process a data access request. The memory management unit 105 is specifically configured to map a virtual address (virtual address, VA) in the data access request. The memory management unit 105 may intercept a data access request sent by the core of the processor 101, and map (or translate) a virtual address in the data access request to a physical address (physical address, PA), to access the memory 103 based on the physical address.

The input/output memory management unit 106 is essentially a memory management unit. Similar to that the memory management unit 105 maps a virtual address visible to the processor 101 to a physical address, the input/output memory management unit 106 is configured to map a virtual address (which may also be referred to as a device address or an I/O address) visible to the input/output device 102 to a physical address.

The storage 107 is also referred to as an external storage or a secondary memory, and is usually configured to persistently store data. For example, the storage 107 may persistently store the operation data in the processor 101. Even if power supply is abnormal, data that has been written into the storage 107 will remain intact. This avoids a data loss. During specific implementation, the storage 107 includes at least one non-volatile memory 1071. When the storage includes a plurality of non-volatile memories, the plurality of non-volatile memories may be of a same type, or may be of different types. For example, in an example of FIG. 1, the storage 107 may include two types of non-volatile memories, for example, a storage class memory (storage class memory, SCM) and a solid-state drive (solid-state drive, SSD).

The bus 108 is configured to connect functional components of the computer system. The bus 108 is a public communication backbone for transmitting information between the functional components of the computer system. The bus 108 may be a transmission wire bundle formed by wires. The bus 108 may be further classified into an internal bus and an external bus based on different connection objects.

The internal bus uses an internal bus protocol to transmit information. The internal bus protocol includes a bus protocol used to access a memory space of the computer system. The external bus uses an external bus protocol to transmit information. The external bus protocol includes a bus protocol used to access a storage space of the computer system. The memory space is an address space of the memory, and the storage space is an address space of the storage.

In some embodiments, the internal bus protocol includes but is not limited to a peripheral component interconnect (peripheral component interconnect, PCI) bus, a peripheral component interconnect express (PCI Express, PCIe) protocol, a QuickPath interconnect (Intel^{®} QuickPath Interconnect, QPI) protocol, and a universal bus (unified bus) protocol. The external bus protocol includes but is not limited to a small computer system interface (small computer system interface, SCSI) protocol or a serial attached small computer system interface (Serial Attached SCSI, SAS) protocol.

It should be noted that the computer system shown in FIG. 1 is described by using an example in which the storage 107 is a remote storage. As shown in FIG. 1, the storage 107 includes a network interface card 1072. The network interface card 1072 may be, for example, a smart network interface card NIC (that is, a network adapter card). The storage 107 accesses a network via the network interface card 1072, and is further connected to another component of the computer system over the network. The network may be a wired communication network, for example, an optical fiber communication network, or may be a wireless communication network, for example, a wireless local area network (wireless local area network, WLAN) or a fifth generation (fifth generation, 5G) mobile communication network.

In some possible implementations, the storage 107 of the computer system may alternatively be a local storage, and another component of the computer system, for example, the processor 101, may be connected to the local storage through the bus 108. In some other possible implementations, the computer system may include both a remote storage and a local storage. In addition, this embodiment of this application is applicable to a central storage scenario or a distributed storage scenario. This is not limited in this embodiment.

For example, a communication method provided in embodiments of this application may be further applied to a server cluster that is shown in FIG. 2 and that performs communication across networks, for example, a data center shown in FIG. 2. An internal structure of a switch, a host, or a device shown in FIG. 2 is shown in FIG. 1.

In addition, the internal bus protocol supported by the computer system in this application includes the universal bus protocol, and a transport layer connection may be established between computer systems. The universal bus protocol may also be referred to as a LingQu bus protocol or a unified bus protocol, and is a bus protocol standard. A name of the universal bus protocol is not limited in this application.

With reference to FIG. 1 and FIG. 2, the foregoing briefly describes the scenario to which this application can be applied. To facilitate understanding of embodiments of this application, some basic concepts in this application are briefly described.
1. I/O die: A compute node generally includes a system on a chip (System on a Chip, SoC) and a memory. The SoC may be but is not limited to a central processing unit (Central Processing Unit, CPU), a neural processing unit (Neural Processing Unit, NPU), a graphics processing unit (Graphics Processing Unit, GPU), or the like. The memory may be a DDR and/or an HBM. The SoC chip supports more interconnect port links to improve an interconnect bandwidth specification. However, if a quantity of interconnect port links exceeds a chip design or manufacturing requirement, this needs to be implemented by integrating a plurality of input/output dies (I/O die). Each SoC includes a plurality of I/O dies (input/output dies), and each I/O die may have one or more ports designed by different vendors. The I/O die may be a die integrated in the SoC, or may be a die in a chiplet (chiplet), or may be an independent chip in a system. A specific form of the I/O die is not limited in this application.
   In this application, one physical node (for example, a host or a device) includes at least one I/O die, each I/O die includes at least one port, one network address (Network Address, NA) is allocated to each port, and network addresses of a plurality of ports of a same I/O die may be different or the same.
2. Asymmetric interconnection: Asymmetric interconnection is mainly used to connect a plurality of hosts and a plurality of devices. The "asymmetric" means that a quantity of ports on a device side is different from that on a host side, and the quantity of ports on the host side is larger. For example, the device side includes a single I/O die (each I/O die includes a single port or a plurality of ports), and the host side includes a plurality of I/O dies. When accessing a memory of the host node, the plurality of devices may share a large bandwidth of the host node.

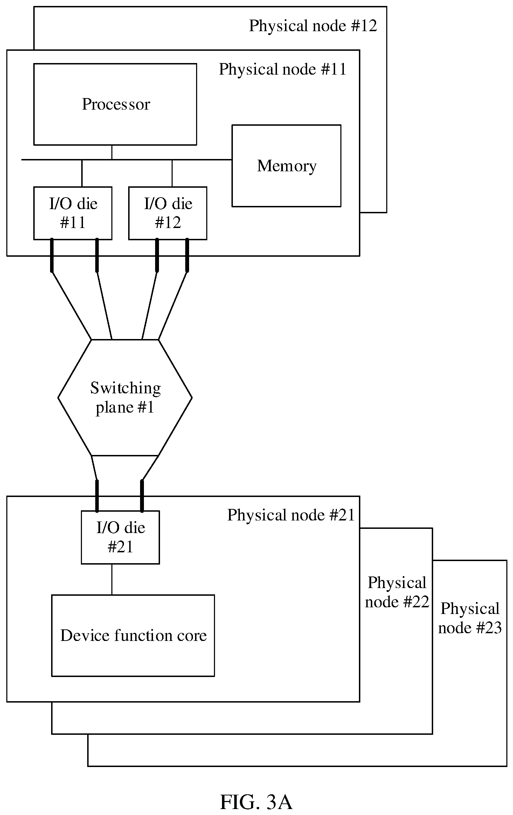

For ease of understanding, an asymmetric interconnection scenario is briefly described with reference to FIG. 3A.

As shown in FIG. 3A, in the asymmetric interconnection scenario, a plurality of hosts (for example, a physical node #11 and a physical node #12 shown in FIG. 3A) and a plurality of devices (for example, a physical node #21, a physical node #22, and a physical node #23 shown in FIG. 3A) are included. One or more ports of the physical node are connected to one or more switching planes (for example, a switching plane #1 shown in FIG. 3A), each switching plane may include one or more switches, and a packet at a transmitter can reach an I/O die at a receiver through any switching plane. It can be seen from FIG. 3A that a host side includes a plurality of I/O dies (for example, an I/O die #11 and an I/O die #12 shown in FIG. 3A), and a device side includes a single I/O die (for example, an I/O die #21 shown in FIG. 3A).

3. Single-plane symmetric interconnection: Single-plane symmetric interconnection is mainly used to connect a plurality of physical nodes. The "symmetric" means that a quantity of ports on a device side is the same as that on a host side. For example, the device side and the host each may include a plurality of I/O dies (each I/O die includes a single port or a plurality of ports), or the device side and the host each may include a single I/O die (each I/O die includes a single port or a plurality of ports). All ports are connected to a same switching plane. A physical node uses a high bandwidth to directly access a memory of another node.

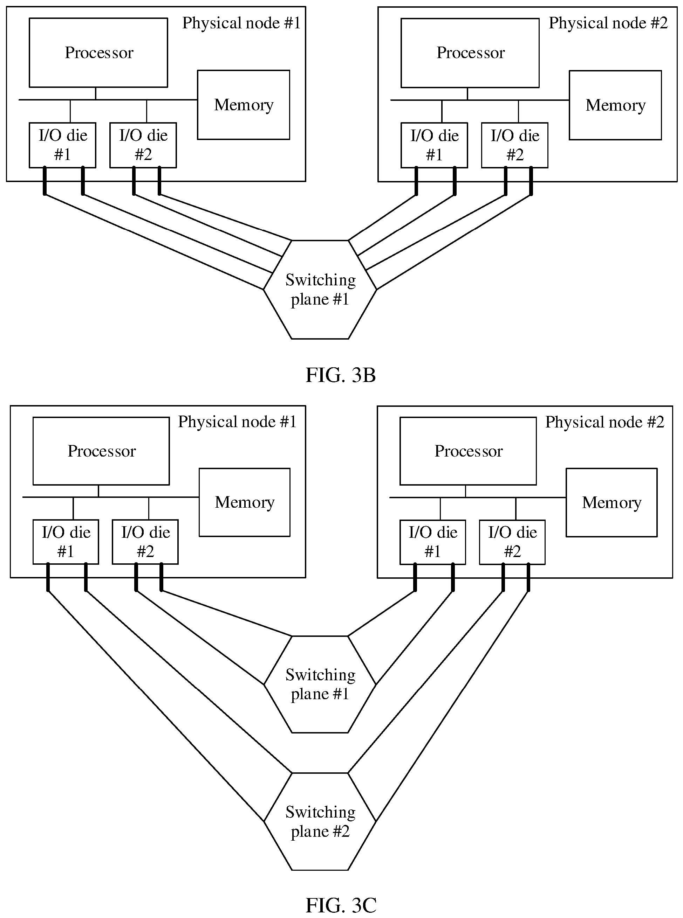

For ease of understanding, a single-plane symmetric interconnection scenario is briefly described with reference to FIG. 3B.

As shown in FIG. 3B, in the single-plane symmetric interconnection scenario, a plurality of physical nodes (for example, a physical node #1 and a physical node #2 shown in FIG. 3B) are included. One or more ports of the physical node are connected to one switching plane (for example, a switching plane #1 shown in FIG. 3B), and a transmitter reaches an I/O die at a receiver through the switching plane. It can be seen from FIG. 3B that the physical node includes a plurality of I/O dies (for example, an I/O die #1 and an I/O die #2 on the physical node #1 shown in FIG. 3B, and an I/O die #1 and an I/O die #2 on the physical node #2).

4. Multi-plane symmetric interconnection: Multi-plane symmetric interconnection is mainly used to connect a plurality of physical nodes. A quantity of ports on a device side is the same as that on a host side. For example, the device side and the host each may include a plurality of I/O dies (each die includes a single port or a plurality of ports), or the device side and the host each may include a single I/O die (each I/O die includes a single port or a plurality of ports). A plurality of ports or port groups are connected to different switching planes. A physical node uses a high bandwidth to directly access a memory of another node.

For ease of understanding, a multi-plane symmetric interconnection scenario is briefly described with reference to FIG. 3C.

As shown in FIG. 3C, in the multi-plane symmetric interconnection scenario, a plurality of physical nodes (for example, a physical node #1 and a physical node #2 shown in FIG. 3C) are included. One or more ports of the physical node are connected to a plurality of switching planes (for example, a switching plane #1 and a switching plane #2 shown in FIG. 3C), and a transmitter can reach an I/O die at a receiver through any switching plane. It can be seen from FIG. 3C that the physical node includes a plurality of I/O dies (for example, an I/O die #1 and an I/O die #2 on the physical node #1 shown in FIG. 3C, and an I/O die #1 and an I/O die #2 on the physical node #2).

5. Single I/O die: A single I/O die indicates that each physical node has only one I/O die, and the I/O die has at least one port. Each physical node has at least one compute function instance or device function instance. For ease of description, the compute function instance or the device function instance may be collectively referred to as a compute instance. The compute instance may be understood as a communication object, that is, each physical node has at least one communication object. The I/O die creates one communication entity instance for each communication object.

Specifically, one network address is allocated to each port of the I/O die, and the network address indicates a location of the port of the physical node in an interconnect network. In addition, one network address may also be allocated to each I/O die, and the network address indicates a location of the I/O die of the physical node in the interconnect network. One identity (for example, an entity identifier (Entity Identifier, EID)) is allocated to each communication entity instance, and the identity may uniquely represent a corresponding communication object.

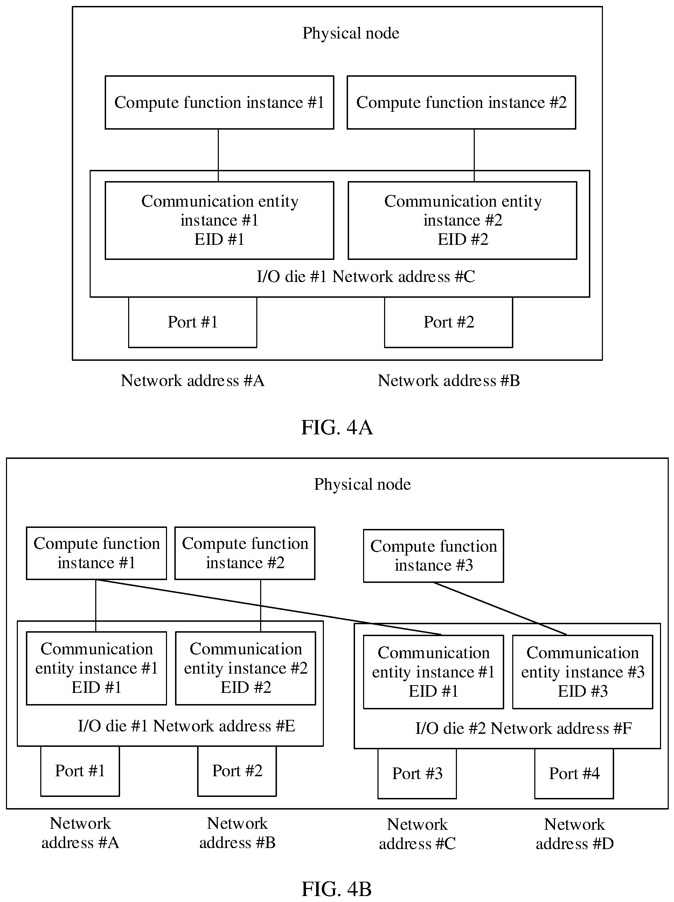

For ease of understanding, a physical node form scenario of the single I/O die is briefly described with reference to FIG. 4A.

As shown in FIG. 4A, a physical node includes one I/O die (for example, an I/O die #1 shown in FIG. 4A), and the I/O die has at least one port (for example, a port #1 and a port #2 shown in FIG. 4A). The physical node includes at least one compute instance (for example, a compute instance #1 and a compute instance #2 shown in FIG. 4A). The compute instance #1 is understood as a communication object #1, the I/O die creates a communication entity instance #1 for the communication object #1, and an identity of the communication entity instance #1 is an EID #1. The compute instance #2 is understood as a communication object #2, the I/O die creates a communication entity instance #2 for the communication object #2, and an identity of the communication entity instance #2 is an EID #2.

Specifically, one network address (for example, a network address #A of the port #1 shown in FIG. 4A or a network address #B of the port #2) is allocated to each port of the I/O die, and one network address (for example, a network address #C of the I/O die #1 shown in FIG. 4A) may also be allocated to the I/O die.

The physical node shown in FIG. 4A may receive, from the port #1, packets whose destination network addresses are the network address #A and the network address #C, and may receive, from the port #2, packets whose destination network addresses are the network address #B and the network address #C. That is, a packet whose destination network address is a network address of a port can be received only from a corresponding port, and a packet whose destination network address is a network address of an I/O die can be received from all ports of the I/O die.

6. A plurality of I/O dies: The plurality of I/O dies indicate that each physical node has at least two I/O dies, and each I/O die has at least one port. Each physical node has at least one compute function instance or device function instance. For ease of description, the compute function instance or the device function instance may be collectively referred to as a compute instance. The compute instance may be understood as a communication object, that is, each physical node has at least one communication object. The I/O die creates one communication entity instance for each communication object.

Communication entity instances located on two I/O dies may be aggregated into one virtual communication entity instance (for example, represented by using a same EID) used by one communication object.

Specifically, one network address is allocated to each port of the I/O die, and the network address indicates a location of the port of the physical node in an interconnect network. In addition, one network address may also be allocated to each I/O die, and the network address indicates a location of the I/O die of the physical node in the interconnect network. One identity (for example, an EID) is allocated to each communication entity instance, and the identity may uniquely represent a corresponding communication object.

For ease of understanding, a physical node form scenario of the single I/O die is briefly described with reference to FIG. 4B.

As shown in FIG. 4B, a physical node includes a plurality of I/O dies (for example, an I/O die #1 and an I/O die #2 shown in FIG. 4B), and each I/O die has at least one port (for example, a port #1 and a port #2 of the I/O die #1 shown in FIG. 4B, and a port #3 and a port #4 of the I/O die #2). The physical node includes at least one compute instance (for example, a compute instance #1, a compute instance #2, and a compute instance #3 shown in FIG. 4B). The compute instance #1 is understood as a communication object #1, the I/O die #1 and the I/O die #2 respectively create communication entity instances #1 for the communication object #1, and an identity of the communication entity instance #1 is an EID #1. The compute instance #2 is understood as a communication object #2, the I/O die #1 creates a communication entity instance #2 for the communication object #2, and an identity of the communication entity instance #2 is an EID #2. The compute instance #3 is understood as a communication object #3, the I/O die #2 creates a communication entity instance #3 for the communication object #3, and an identity of the communication entity instance #3 is an EID #3. The communication entity instance #1 located on the I/O die #1 and the communication entity instance #2 located on the I/O die #2 may be aggregated into one virtual communication entity instance used by one compute instance #1.

Specifically, one network address (for example, a network address #A of the port #1 of the I/O die #1 shown in FIG. 4B, a network address #B of the port #2 of the I/O die #1, a network address #C of the port #3 of the I/O die #2, or a network address #D of the port #4 of the I/O die #2) is allocated to each port of the I/O die. One network address (for example, a network address #E of the I/O die #1 shown in FIG. 4B or a network address #F of the I/O die #2) may also be allocated to the I/O die.

The network address #A and the network address #B shown in FIG. 4B may be the same or different, the network address #C and the network address #D may be the same or different, and the network address #E and the network address #F may be the same or different. One identity is allocated to each communication entity instance, and the identity may uniquely represent a corresponding communication object.

The physical node shown in FIG. 4B may receive, from the port #1 of the I/O die #1, packets whose destination network addresses are the network address #A and the network address #E, may receive, from the port #2 of the I/O die #1, packets whose destination network addresses are the network address #B and the network address #E, may receive, from the port #3 of the I/O die #2, packets whose destination network addresses are the network address #C and the network address #F, and may receive, from the port #4 of the I/O die #2, packets whose destination network addresses are the network address #D and the network address #F. That is, a packet whose destination network address is a network address of a port can be received only from a corresponding port, and a packet whose destination network address is a network address of an I/O die can be received from all ports of the I/O die.

The foregoing briefly describes the scenario to which the communication method provided in this application is applicable, and describes the basic concepts in this application. In addition, the concept related to the I/O die is described in the basic concept. How to effectively use a physical bandwidth of one or more I/O dies and one or more port links to meet a requirement of an application becomes a challenge.

This application proposes a communication method and an apparatus, to meet a bandwidth requirement of an application by using one or more I/O dies and one or more port links. The following describes in detail the communication method provided in this application with reference to accompanying drawings.

It should be understood that the communication method provided in embodiments of this application may be applied to a computer system, for example, may be applied to a plurality of hosts, multi-device resource pools, or supernodes that are interconnected via a bus system.

It should be further understood that a specific structure of an execution body of the method provided in embodiments of this application is not particularly limited in the following embodiments, provided that a program that records code of the method provided in embodiments of this application can be run to implement the method provided in embodiments of this application. For example, the method provided in embodiments of this application may be performed by a device, or a functional module, within a device, that can invoke the program and execute the program.

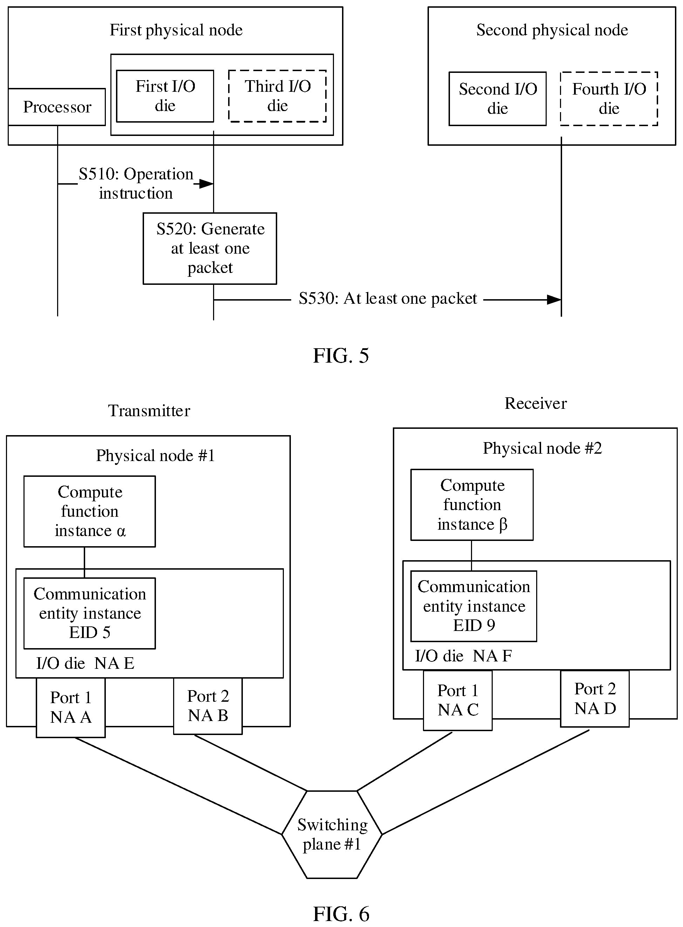

FIG. 5 is a schematic flowchart of a communication method according to this application. The method is applied to a scenario in which a first physical node and a second physical node communicate with each other. The first physical node and the second physical node may be hosts, device resource pools, or supernodes that are interconnected through a bus system.

In the embodiment shown in FIG. 5, the second physical node may be used as a receiver (or referred to as a target device (target)), and the first physical node may be used as a transmitter (or referred to as a source device (initiator)). For the receiver, the receiver is a local device, the transmitter is a remote device, and a command received by the receiver from the transmitter is referred to as a remote command.

For example, the first physical node may be a physical machine or a virtual machine. If the first physical node is a virtual machine, steps performed by the first physical node may be performed by the virtual machine. Similarly, the second physical node may be a physical machine or a virtual machine. If the second physical node is a virtual machine, steps performed by the second physical node may be performed by the virtual machine.

Specifically, the first physical node includes a first processing unit and at least one I/O die, and the first processing unit includes at least one processor or device function core die. The first processing unit is configured to create a compute function instance or a device function instance. For example, the first processing unit is configured to create at least one compute instance, and the at least one I/O die is respectively configured to create a communication entity instance for the compute instance.

For example, the first physical node includes the first processing unit and a first I/O die, the first processing unit is configured to create a first compute instance, the first I/O die is configured to create a first communication entity instance for the first compute instance, an identifier of the first communication entity instance is a first EID, the first I/O die includes at least one first port, the at least one first port respectively corresponds to at least one first network address, and the first I/O die corresponds to a fourth network address. Further, the first physical node further includes a third I/O die, the third I/O die corresponds to the fourth network address, the third I/O die is configured to create a third communication entity instance for the first compute instance, an identifier of the third communication entity instance is the first EID, the third I/O die includes at least one third port, and the at least one third port respectively corresponds to at least one fifth network address.

For another example, the first physical node includes the first processing unit and a plurality of first I/O dies, the first processing unit is configured to create a first compute instance, the plurality of I/O dies are configured to create a plurality of first communication entity instances for the first compute instance, identifiers of the plurality of first communication entity instances are all a first entity identifier EID, the plurality of first I/O dies include a plurality of first ports, the plurality of first ports respectively correspond to a plurality of first network addresses, and network addresses of the plurality of first I/O dies are all fourth network addresses. Each of the plurality of first I/O dies includes at least one first port, and one first network address is allocated to each first port, in other words, the at least one first port one-to-one corresponds to the at least one first network address. First network addresses corresponding to different first ports are the same or different (for example, first network addresses corresponding to first ports of a same first I/O die may be the same).

Specifically, the second physical node includes a second processing unit and at least one I/O die, and the second processing unit includes at least one processor or device function core die. The second processing unit is configured to create a compute function instance or a device function instance. For example, the second processing unit is configured to create a compute instance, and the at least one I/O die is respectively configured to create a communication entity instance for the compute instance.

For example, the second physical node includes the second processing unit and a second I/O die, the second processing unit is configured to create a second compute instance, the second I/O die is configured to create a second communication entity instance for the second compute instance, an identifier of the second communication entity instance is a second EID, the second I/O die includes at least one second port, the at least one second port respectively corresponds to at least one second network address, and the second I/O die corresponds to a third network address. Further, the second physical node further includes a fourth I/O die, the fourth I/O die corresponds to the third network address, the fourth I/O die is configured to create a fourth communication entity instance for the second compute instance, an identifier of the fourth communication entity instance is the second EID, the fourth I/O die includes at least one fourth port, and the at least one fourth port respectively corresponds to at least one sixth network address.

For another example, the second physical node includes the second processing unit and a plurality of second I/O dies, the second processing unit is configured to create a second compute instance, the plurality of second I/O dies are respectively configured to create a plurality of second communication entity instances for the second compute instance, identifiers of the plurality of second communication entity instances are all a second EID, the plurality of second I/O dies include a plurality of second ports, the plurality of second ports respectively correspond to a plurality of second network addresses, and network addresses of the plurality of second I/O dies are all third network addresses. Each of the plurality of second I/O dies includes at least one second port, and one second network address is allocated to each second port, that is, the at least one second port one-to-one corresponds to the at least one second network address. Second network addresses corresponding to different second ports are the same or different (for example, second network addresses corresponding to second ports of a same second I/O die may be the same).

For example, a first network address of a first port is different from a second network address of a second port.

For example, a first I/O die includes a first port #1 and a first port #2, a network address of the first port #1 is a first network address #1, and a network address of the first port #2 is a first network address #2; and a second I/O die includes a second port #1 and a second port #2, a network address of the second port #1 is a second network address #1, and a network address of the second port #2 is a second network address #2. The first network address #1 is the same as or different from the first network address #2, the second network address #1 is the same as or different from the second network address #2, the first network address #1 is different from the second network address #1 or the second network address #2, and the first network address #2 is different from the second network address #1 or the second network address #2.

In this embodiment, the physical node includes at least one compute/device function instance (for example, the foregoing compute instance, where the compute instance may also be referred to as a compute function instance or a device function instance, and a name is not limited). Each compute instance is a communication object during communication. The communication object is a functional entity that uses a communication function in a system, and includes but is not limited to a host, a virtual machine, a container, a process, a device, a service, or the like.

The method shown in FIG. 5 includes the following steps.

S510: The at least one I/O die of the first physical node receives an operation instruction.

Specifically, the operation instruction instructs to access a memory of the compute instance in the second physical node. For example, the operation instruction instructs to read or write a memory of at least one compute instance.

In a possible implementation, the first physical node includes the first I/O die. In this case, the first I/O die receives a first operation instruction.

In this implementation, the first physical node may be understood as a single I/O die physical node.

In another possible implementation, the first physical node includes the first I/O die and the third I/O die. In this case, the first I/O die receives a first operation instruction, and the third I/O die receives a second operation instruction.

In this implementation, the first physical node may be understood as a multi-I/O die physical node. Optionally, the first physical node further includes a scheduler module. The scheduler module splits the operation instruction into the first operation instruction and the second operation instruction, sends the first operation instruction to the first I/O die, and sends the second operation instruction to the third I/O die.

In another possible implementation, the first physical node includes the plurality of first I/O dies. In this case, each of the plurality of first I/O dies receives a first operation instruction.

In this implementation, the first physical node may be understood as a multi-I/O die physical node. Optionally, the first physical node further includes a scheduler module. The scheduler module splits the operation instruction into a plurality of first operation instructions, and respectively sends the plurality of first operation instructions to the plurality of first I/O dies.

For example, the first physical node includes a first I/O die #1, a first I/O die #2, and a first I/O die #3. The scheduler module splits the operation instruction into a first operation instruction #1, a first operation instruction #2, and a first operation instruction #3, sends the first operation instruction #1 to the first I/O die #1, sends the first operation instruction #2 to the first I/O die #2, and sends the first operation instruction #3 to the first I/O die #3.

S520: The at least one I/O die of the first physical node generates at least one packet.

Specifically, the at least one I/O die of the first physical node generates the at least one packet according to the operation instruction, and the at least one packet is sent to the at least one second port through the at least one first port and at least one switching plane.

In a possible implementation, the first physical node includes the first I/O die, and the first I/O die generates at least one first packet according to the first operation instruction.

For example, the first I/O die of the first physical node performs slicing processing on the first operation instruction based on information about the first operation instruction, to generate at least one slice, and each slice correspondingly generates one first packet.

If the first operation instruction is a direct memory access (direct memory access, DMA) operation instruction, the information about the first operation instruction includes but is not limited to an identifier of a destination communication entity instance, an operation code, an I/O memory address, and a length.

If the first operation instruction is a load (load) or store (store) operation instruction, the information about the first operation instruction includes but is not limited to an operation code, a memory address (for example, a hard physical address (hard physical address, HPA)), a length, and the like. When the first operation instruction is a load/store operation instruction, the first I/O die of the first physical node first queries a decoding table to find the identifier of the destination communication entity instance and the I/O memory address based on the memory address.

In another possible implementation, the first physical node includes the first I/O die and the third I/O die, the first I/O die generates at least one first packet according to the first operation instruction, and the third I/O die generates at least one second packet according to the second operation instruction.

In this implementation, for related descriptions of the first operation instruction and the second operation instruction, refer to the foregoing descriptions of the first operation instruction. Details are not described herein again.

Further, the at least one I/O die of the first physical node sends the at least one generated packet to a part or all of the at least one second port of the second physical node. In this case, the method procedure shown in FIG. 5 further includes the following step.

S530: The at least one I/O die of the first physical node sends the at least one packet to the second physical node.

Specifically, the at least one first I/O die of the first physical node sends the at least one packet through a part or all of the at least one first port to the part or all of the at least one second port through the at least one switching plane.

It should be understood that, to enable the at least one packet to be successfully sent to the second physical node, a management functional entity (or referred to as a system administrator) in this embodiment performs the following configurations:

### (1) Configuration on the first physical node

In a possible implementation, the first physical node and the second physical node are in a single I/O die form. For example, that the first physical node includes the at least one I/O die includes: The first physical node includes a first I/O die #1; and that the second physical node includes the at least one I/O die includes: The second physical node includes a second I/O die #1.

In this implementation, a first communication entity instance #1 may be created for a first compute instance #1 on the first I/O die #1, and the first EID may be allocated to the first communication entity instance #1. Further, a destination table and a routing table are configured for the first I/O die #1, where the destination table includes a first destination table entry.

Optionally, the first destination table entry includes the second EID of a second communication entity instance #1 and the third network address of the second I/O die #1 corresponding to the second EID.

Optionally, the first destination table entry includes the second EID of a second communication entity instance #1 and a second network address of at least one second port of the second I/O die #1 corresponding to the second EID.

Optionally, the routing table includes a default routing table entry, and the default routing table entry indicates the at least one first port.

Optionally, the routing table includes at least one second routing table entry, the at least one second routing table entry respectively corresponds to the at least one second port, and each second routing table entry includes a second network address of a corresponding second port and identifiers of one or more first ports in the at least one first port.

For example, the third network address of the second I/O die #1 of the second physical node is a third network address #1, at least one first port included in the first I/O die #1 includes a first port #1 and a first port #2, and the at least one second port included in the second I/O die #1 includes a second port #1 and a second port #2. In addition, the first port #1 and the first port #2, and the second port #1 and the second port #2 may be connected to one or more switching planes, and the transmitter can reach an I/O die at the receiver through any switching plane. In this case, the default routing table entry indicates the first port #1 and the first port #2, the at least one second routing table entry includes a second routing table entry #1 and a second routing table entry #2, the second routing table entry #1 includes a second network address of the second port #1 and an identifier of the first port #1 corresponding to the second port #1, and the second routing table entry #2 includes a second network address of the second port #2 and an identifier of the first port #2 corresponding to the second port #2.

In another possible implementation, the first physical node and the second physical node are in a multi-I/O die form. For example, that the first physical node includes the at least one I/O die includes: The first physical node includes a first I/O die #1 and a first I/O die #2; and that the second physical node includes the at least one I/O die includes: The second physical node includes a second I/O die #1 and a second I/O die #2.

In this implementation, a first communication entity instance #1 may be created for a first compute instance #1 on the first I/O die #1, and the first EID may be allocated to the first communication entity instance; and a first communication entity instance #2 may be created for the first compute instance #1 on the first I/O die #2, and the first EID may be allocated to the first communication entity instance #2.

Further, destination tables and routing tables are configured for the first I/O die #1 and the first I/O die #2, where the destination table includes a first destination table entry. For example, a first destination table #1 and a first routing table #1 are configured for the first I/O die #1, where the first destination table #1 includes a first destination table entry #1; and a first destination table #2 and a first routing table #2 are configured for the first I/O die #2, where the first destination table #2 includes a first destination table entry #2.

Optionally, the first destination table entry #1 and the first destination table entry #2 include the second EID of a second communication entity instance #1 and a second communication entity instance #2 in the second physical node, and third network addresses of the second I/O die #1 and the second I/O die #2 that correspond to the second EID.

Optionally, the first destination table entry #1 and the first destination table entry #2 include the second EID of a second communication entity instance #1 and a second communication entity instance #2 in the second physical node, a network address of at least one second port of the second I/O die #1 corresponding to the second EID, and a network address of at least one second port of the second I/O die #2 corresponding to the second EID.

Optionally, the first routing table #1 includes a first default routing table entry #1, and the first default routing table entry #1 indicates at least one first port of the first I/O die #1; and the first routing table #2 includes a first default routing table entry #2, and the first default routing table entry #2 indicates at least one first port of the first I/O die #2.

Optionally, the first routing table #1 includes at least one second routing table entry #1, the at least one second routing table entry #1 respectively corresponds to the at least one second port, and each second routing table entry #1 includes a second network address of a corresponding second port and identifiers of one or more first ports in the at least one first port. The first routing table #2 includes at least one second routing table entry #2, the at least one second routing table entry #2 respectively corresponds to the at least one second port, and each second routing table entry #2 includes a network address of a corresponding second port and identifiers of one or more first ports in the at least one first port.

For another example, that the first physical node includes the at least one I/O die includes: The first physical node includes the first I/O die and the third I/O die; and that the second physical node includes the at least one I/O die includes: The second physical node includes the second I/O die and the fourth I/O die.

In this implementation, the first communication entity instance may be created for the first compute instance on the first I/O die, and the first EID may be allocated to the first communication entity instance; and the third communication entity instance may be created for the first compute instance on the third I/O die, and the first EID may be allocated to the third communication entity instance.

Further, destination tables and routing tables are configured for the first I/O die and the third I/O die, where the destination table includes a first destination table entry. For example, a destination table and a first routing table are configured for the first I/O die, where the destination table includes a first destination table entry; and a destination table #2 and a third routing table are configured for the third I/O die.

Optionally, the first destination table entry includes the second EID, and third network addresses of the second I/O die and the fourth I/O die that correspond to the second EID.

Optionally, the first destination table entry includes a second network address of the at least one second port of the second I/O die corresponding to the second EID, and/or a sixth network address of the at least one fourth port of the fourth I/O die corresponding to the second EID.

Optionally, the first routing table includes a default routing table entry, and the default routing table entry indicates the at least one first port.

Optionally, the first routing table includes at least one second routing table entry, the at least one second routing table entry corresponds to the at least one second port and/or the at least one fourth port, and each second routing table entry includes a second network address of a corresponding second port and/or a sixth network address of the at least one fourth port, and identifiers of one or more first ports in the at least one first port.

Optionally, the third routing table includes a default routing table entry, and the default routing table entry indicates the at least one third port.

Optionally, the third routing table includes at least one fourth routing table entry, the at least one fourth routing table entry corresponds to the at least one second port and/or the at least one fourth port, and each fourth routing table entry includes a second network address of a corresponding second port and/or a sixth network address of the at least one fourth port, and identifiers of one or more third ports in the at least one third port.

For ease of description, in the following descriptions, if the first physical node and/or the second physical node are/is in the form of the plurality of I/O dies, an example in which a plurality of I/O dies on the first physical node are the plurality of first I/O dies and a plurality of I/O dies on the second physical node are the plurality of second I/O dies is used for description.

Optionally, if the second physical node is faulty, and the second communication entity instance is migrated to a third physical node, the configuration on the first physical node needs to be updated correspondingly.

For example, when a destination table configured for each I/O die on the first physical node includes a first destination table entry, and a routing table includes a default routing table entry, the first destination table entry is updated to a second destination table entry, where the second destination table entry includes the second EID and a seventh network address corresponding to the second EID, and the seventh network address is a network address allocated to an I/O die on the third physical node. In addition, the default routing table entry does not need to be updated.

For another example, when a destination table configured for each I/O die on the first physical node includes a first destination table entry, a routing table includes at least one routing table entry, and each routing table entry indicates a network address of a port of a peer I/O die, the first destination table entry is updated to a second destination table entry, where the second destination table entry includes the second EID and a seventh network address corresponding to the second EID, and the seventh network address is a network address allocated to an I/O die on the third physical node. A network address of a port (for example, a network address of a port of the at least one I/O die on the second physical node, for example, a second network address of the second port and/or a sixth network address of the fourth port) indicated by each routing table entry (for example, the second routing table entry and/or the fourth routing table entry) in the at least one routing table entry is updated to a network address allocated to a port of the I/O die on the third physical node.

For example, when the routing table includes the default routing table entry, that an I/O die on the first physical node sends the at least one packet includes:

The I/O die on the first physical node determines, by querying the destination table based on the identifier (for example, the second EID) of the destination communication entity instance in the operation instruction, that a destination network address is a network address (for example, the third network address) of the at least one I/O die on the second physical node; and the I/O die on the first physical node determines, by querying the default routing table entry of the routing table based on the destination network address, a port for sending the packet.

In this implementation, the first I/O die may determine, based on a load status of the at least one first port, to separately transmit the at least one first packet through a part or all of the at least one first port, to implement load balancing; and/or the third I/O die may determine, based on a load status of the at least one third port, to separately transmit the at least one second packet through a part or all of the at least one third port, to implement load balancing. That is, each I/O die may determine a packet transmission path based on a load status of a port of the I/O die.

For example, when the routing table includes the at least one second routing table entry, that an I/O die on the first physical node sends the at least one packet includes:

The I/O die on the first physical node determines, by querying the destination table based on the identifier (for example, the second EID) of the destination communication entity instance in the operation instruction, that a destination network address is a network address of a port (for example, the second network address of the at least one second port and/or the sixth network address of the at least one fourth port) of the at least one die on the second physical node; and the I/O die on the first physical node determines, by querying the at least one second routing table entry of the routing table based on the network address of the port of the at least one I/O die, a port for sending the packet.

In this implementation, the first I/O die may determine, based on a quantity of network addresses (for example, a quantity of second network addresses and/or a quantity of sixth network addresses) of a port of the at least one I/O die on the second physical node in the destination table, to transmit the packet through a part or all of at least one port (for example, the at least one second port and/or the at least one fourth port) of the at least one I/O die on the second physical node, and the first I/O die determines, based on a load status of the at least one first port, to transmit the at least one first packet through a part or all of the at least one first port, to implement load balancing; and/or the third I/O die may determine, based on the quantity of network addresses (for example, the quantity of second network addresses and/or the quantity of sixth network addresses) of the port of the at least one I/O die on the second physical node in the destination table, to transmit the packet through a part or all of the at least one port (for example, the at least one second port and/or the at least one fourth port) of the at least one I/O die on the second physical node, and the third I/O die may determine, based on a load status of the at least one third port, to transmit the at least one second packet separately from a part or all of the at least one third port, to implement load balancing. That is, each I/O die may determine a packet transmission path based on a quantity of destination network addresses and a load status of a port of the I/O die. For example, there are two destination network addresses (for example, C or D). The first I/O die performs slicing processing to generate the at least one slice, assigns the slice to the destination network address C or D, queries the routing table via the destination network address of the slice to obtain the at least one first port, and selects a first port based on the load status of the at least one first port.

### (2) Configuration on the second physical node

In a possible implementation, the first physical node and the second physical node are in a single I/O die form. For example, that the first physical node includes the at least one I/O die includes: The first physical node includes a first I/O die #1; and that the second physical node includes the at least one I/O die includes: The second physical node includes a second I/O die #1.

In this implementation, a second communication entity instance #1 may be created for a second compute instance #1 on the second I/O die #1, and the second EID is allocated to the second communication entity instance #1. Further, a first page table is created for the second compute instance #1, and a page table entry is configured for the second I/O die #1. The page table entry includes a first page table entry item, and the first page table entry item includes the second EID and a memory address of the first page table corresponding to the second EID.

In another possible implementation, the first physical node and the second physical node are in a multi-I/O die form. For example, that the first physical node includes the at least one I/O die includes: The first physical node includes a first I/O die #1 and a first I/O die #2; and that the second physical node includes the at least one I/O die includes: The second physical node includes a second I/O die #1 and a second I/O die #2.

In this implementation, a second communication entity instance #1 may be created for a second compute instance #1 on the second I/O die #1, and the second EID is allocated to the second communication entity instance #1; and a second communication entity instance #2 may be created for a second compute instance #2 on the second I/O die #2, and the second EID is allocated to the second communication entity instance #2. Further, a first page table is created for the second compute instance #1, and page table entries are configured for the second I/O die #1 and the second I/O die #2. The page table entry includes a first page table entry item, and the first page table entry item includes the second EID and a memory address of the first page table corresponding to the second EID.

After receiving the packet, the I/O die of the second physical node queries the page table entry by using a destination communication object identifier in the packet, to obtain the memory address of the first page table, continues to query the first page table to obtain a physical address of a to-be-accessed memory space, and initiates a memory read/write operation via the physical address.

### (3) Configuration on the switching plane

The at least one first port and the at least one second port are connected to the at least one switching plane.

Optionally, the at least one first port and the at least one second port are connected to one switching plane #1, and routing table entries pointing to a network address of the at least one first port, a network address of the at least one second port, a network address of the at least one first I/O die, and a network address of the at least one second I/O die are configured on the switching plane #1.

Optionally, the at least one first port and the at least one second port are connected to a plurality of switching planes, and routing table entries pointing to network addresses of a part or all of the at least one first port, network addresses of a part or all of the at least one second port, a network address of the at least one first I/O die, and a network address of the at least one second I/O die are configured on each switching plane #1 of the plurality of switching planes.

For example, the first I/O die includes a first port #1 and a first port #2, a network address of the first port #1 is a first network address #1, a network address of the first port #2 is a first network address #2, and a network address of the first I/O die is a fourth network address #1; and the second I/O die includes a second port #1 and a second port #2, a network address of the second port #1 is a second network address #1, a network address of the second port #2 is a second network address #2, and a network address of the second I/O die is a third network address #1. The first port #1, the first port #2, the second port #1, and the second port #2 are connected to a switching plane #1, and routing table entries pointing to the first network address #1, the first network address #2, the second network address #1, the second network address #2, the fourth network address #1, and the third network address #1 are configured on the switching plane #1.

For another example, the first port #1 and the second port #2 are connected to a switching plane #1, the first port #2 and the second port #1 are connected to a switching plane #2, routing table entries pointing to the first network address #1, the second network address #2, the fourth network address #1, and the third network address #1 are configured on the switching plane #1, and routing table entries pointing to the first network address #2, the second network address #1, the fourth network address #1, and the third network address #1 are configured on the switching plane #2.

In the communication method shown in FIG. 5, through a two-layer identifier design based on an EID and network addresses (for example, the network address of the I/O die and the network address of the port on the I/O die), communication objects on at least one physical node can be uniformly identified as peer communication objects based on the EID. In addition, the network address indicates a location of the physical node in an interconnect network. In this way, a communication bandwidth between physical nodes (including a host and a device node) can be extended via at least one I/O die.

By way of example, and not limitation, the communication method shown in FIG. 5 may be applied to a computing system including a plurality of physical nodes (or hosts, devices, or the like), for example, applied to a computing system including a first physical node and a second physical node. The first physical node in the computing system is configured to implement a function of the first physical node in the communication method shown in FIG. 5, and the second physical node in the computing system is configured to implement a function of the second physical node in the communication method shown in FIG. 5. The computing system may also be understood as a computing cluster.

For example, the first physical node and the second physical node are in a single I/O die form, the first physical node includes the first I/O die, and the second physical node includes the second I/O die. The first I/O die in the first physical node is configured to: receive the first operation instruction, generate the at least one first packet according to the first operation instruction, and send the at least one first packet to the second physical node through a port of the first physical node and a switching plane. The second I/O die of the second physical node is configured to: receive the at least one first packet, and access a memory of the second compute instance of the second physical node in response to the at least one first packet.

For another example, the first physical node and the second physical node are in a multi-I/O die form, the first physical node includes the first I/O die and the third I/O die, and the second physical node includes the second I/O die and the fourth I/O die. The first I/O die in the first physical node is configured to: receive the first operation instruction, generate the at least one first packet according to the first operation instruction, and send the at least one first packet to the second physical node through a port of the first physical node and a switching plane. The third I/O die in the first physical node is configured to: receive the second operation instruction, generate the at least one second packet according to the second operation instruction, and send the at least one second packet to the second physical node through a port of the first physical node and a switching plane. The second I/O die and the fourth I/O die of the second physical node are configured to: receive the at least one first packet and the at least one second packet, and access a memory of the second compute instance of the second physical node in response to the at least one first packet and the at least one second packet.

It should be understood that, for descriptions of the plurality of physical nodes in the computing system, refer to the descriptions of the first physical node and the second physical node in the communication method shown in FIG. 5. Details are not described herein again. In addition, for configuration of the plurality of physical nodes in the computing system and configuration of the switching plane, refer to the descriptions of the configuration of the physical node and the configuration of the switching plane in the communication method shown in FIG. 5. Details are not described herein again.

To facilitate understanding of the communication method shown in FIG. 5, the following describes, with reference to specific examples, how to use the at least one I/O die in this application to meet the bandwidth requirement of the application.

Example 1: The first physical node and the second physical node are physical nodes in a single I/O die form.

As shown in FIG. 6, the first physical node is a physical node #1, and the second physical node is a physical node #2. The physical node #1 includes a compute instance α, and the physical node #2 includes a compute instance β. The system administrator creates a communication entity instance EID 5 for the compute instance α on an I/O die of the physical node #1, and creates a communication entity instance EID 9 for the compute instance β on an I/O die of the physical node #2. A network address of the I/O die of the physical node #1 is E, the I/O die of the physical node #1 includes a port 1 (port 1) and a port 2, a network address of the port 1 is A, and a network address of the port 2 is B. A network address of the I/O die of the physical node #2 is F, the I/O die of the physical node #2 includes a port 1 and a port 2, a network address of the port 1 is C, and a network address of the port 2 is D. The physical node #1 serves as a transmitter, and the physical node #2 serves as a receiver. One or more ports of the physical node #1 and one or more ports of the physical node #2 are connected to one or more switching planes. Each switching plane may include one or more switches. The transmitter can reach the I/O die at the receiver through any switching plane.

The system administrator generates one destination table entry pointing to the EID 9 for the I/O die of the physical node #1, and generates one default routing table entry, as shown in Table 1 and Table 2.

**Table 1: Destination table**

| Identity (Key(dstEID)) of a destination communication entity instance | Network address value (value(dstNA)) |
|---|---|
| 9 | F |
| ... | |

**Table 2: Routing table**

| Network address (key(dstNA)) | Output port list value (value(outport list)) |
|---|---|
| Default (default) routing | 1 and 2 |

The system administrator creates a page table β of the compute instance β for the compute instance β on the physical node #2, and generates one page table entry item pointing to the EID 9 for the I/O die of the physical node #2, as shown in Table 3.

**Table 3: Page table entry**

| Key(dstEID) | Page table memory address value (value) |
|---|---|
| 9 | &Page table β |
| ... | |

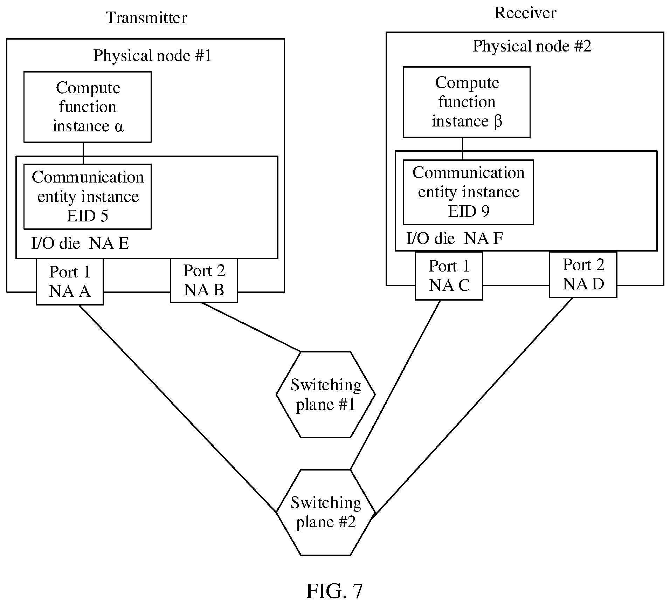

The system administrator generates routing table entries pointing to the network addresses A, B, C, D, E and F for the switch on the switching plane. For example, one or more ports of a physical node #1 and one or more ports of a physical node #2 shown in FIG. 7 are connected to one switching plane #1, and the system administrator generates routing table entries pointing to network addresses A, B, C, D, E and F for a switch of the switching plane #1. Alternatively, when one or more ports of a physical node #1 and one or more ports of a physical node #2 are connected to a plurality of switching planes, the transmitter can reach the I/O die at the receiver through any switching plane, and the system administrator generates a routing table entry pointing to a corresponding network address for a switch of each switching plane. Details are not described herein again.

For example, the communication entity instance EID 5 initiates a memory read/write operation to the communication entity instance EID 9. After the I/O die of the physical node #1 receives information about an operation instruction (if the operation instruction is a DMA operation, the information about the operation instruction includes but is not limited to a destination communication object identifier, an operation code, an I/O memory address, and a length; or if the operation instruction is a load/store operation, the information about the operation instruction includes an operation code, an HPA memory address, and a length; and the I/O die first queries a decoding table to find the destination communication object identifier and the I/O memory address based on an HPA), the I/O die of the physical node #1 obtains the destination network address F by querying the destination table via the destination communication entity instance identifier EID 9. The I/O die of the physical node #1 queries the routing table via the network address F to hit the default routing entry, so as to obtain the port 1 and the port 2 in an output port list.

Further, the I/O die of the physical node #1 performs slicing based on the information about the operation instruction to generate the at least one slice, sends different slices from the selected port 1 or 2 according to a load balancing policy, and sends, to a link, a generated packet corresponding to each slice, where a destination network address of the packet carries F, and a source network address of the packet carries a network address A or B corresponding to a transmit port.

For example, a packet format is shown in Table 4:

| | | | |
|---|---|---|---|
| Network address (for example, the destination network address F and the source network address A, or the destination network address F and the source network address B) | Communication objects (for example, the destination communication object EID 9 and the source communication object EID 5) | Operation and information | Data |

After receiving the packet, a switch queries the routing table based on the destination network address carried in the packet for forwarding, and routes the packet to the I/O die of the physical node #2. After receiving the packet, the I/O die of the physical node #2 obtains the destination communication entity instance identifier EID 9 in the packet, queries the page table entry based on the EID 9 to obtain a memory address corresponding to the page table β, continues to query the page table β to obtain a physical address of a to-be-accessed memory space, and initiates a memory read/write operation via the physical address.

Optionally, in the scenario shown in FIG. 6, if the communication entity instance EID 9 is migrated from the physical node #2 to a physical node #3, and a network address of an I/O die of the physical node #3 is J, the system administrator needs to refresh the destination table entry in the physical node #1, and update dstNA of the EID 9 to the network address J of the I/O die of the physical node #3.

In addition, it should be noted that, as shown in FIG. 6, the one or more ports of the physical node #1 and the one or more ports of the physical node #2 are connected to the one or more switching planes, and the transmitter can reach the I/O die at the receiver through any switching plane. If the one or more ports of the physical node #1 and the one or more ports of the physical node #2 are connected to the plurality of switching planes, but the transmitter cannot reach the I/O die at the receiver through one switching plane (or a plurality of switching planes), as shown in FIG. 7, the transmitter cannot reach the I/O die at the receiver through the switching plane #1.

In the scenario shown in FIG. 7, a difference from the scenario shown in FIG. 6 lies in that the I/O die of the physical node #1 needs to support more routing table entries, the routing table is queried via the network address F to hit a corresponding routing entry, so as to obtain the output port with a higher probability, as shown in Table 5.

**Table 5: Routing table**

| Network address (key(dstNA)) | Output port list value (value(outport list)) |
|---|---|
| F | 1 |
| ... | |
| Default (default) routing | 1 and 2 |

Example 2: The first physical node and the second physical node are physical nodes in a multi-I/O die form.

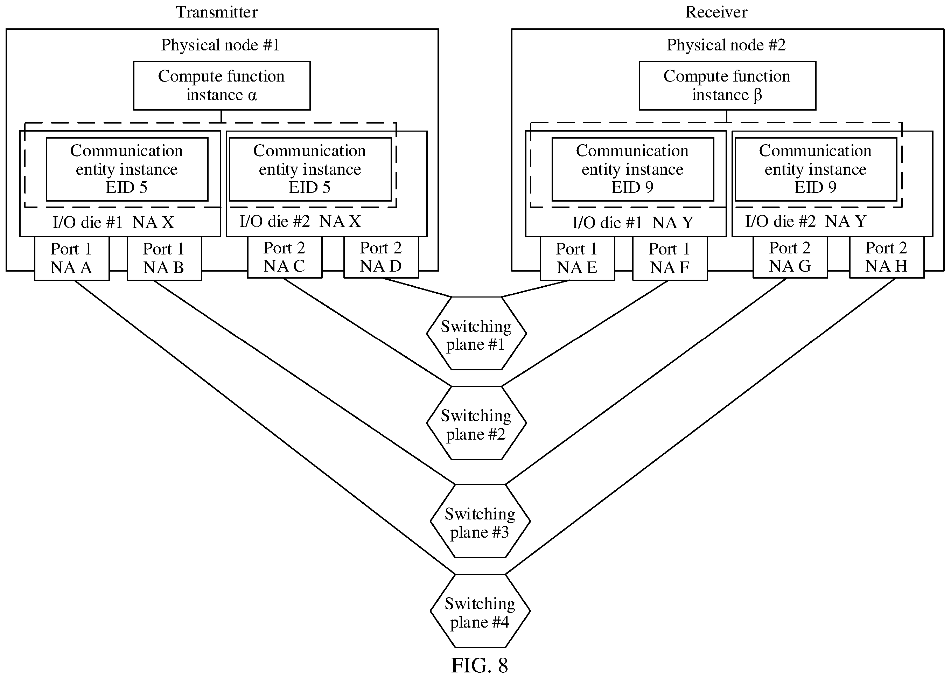

As shown in FIG. 8, the first physical node is a physical node #1, and the second physical node is a physical node #2. The physical node #1 includes a compute instance α, and the physical node #1 includes a compute instance β. The system administrator creates a communication entity instance EID 5 for the compute instance α on an I/O die#1 of the physical node #1, and also creates a communication entity instance EID 5 for the compute instance α on an I/O die#2 of the physical node #1; and creates a communication entity instance EID 9 for the compute instance β on an I/O die #1 of the physical node #2, and also creates a communication entity instance EID 9 for the compute instance β on an I/O die #2 of the physical node #2.

Specifically, the communication entity instance EID 5 located on the I/O die #1 of the physical node #1 and the communication entity instance EID 5 located on the I/O die #2 of the physical node #1 are aggregated into one virtual communication entity instance EID 5 and presented to the compute instance α for use; and the communication entity instance EID 9 located on the I/O die #1 of the physical node #2 and the communication entity instance EID 9 located on the I/O die #2 of the physical node #2 are aggregated into one virtual communication entity instance EID 9 and presented to the compute instance β for use.

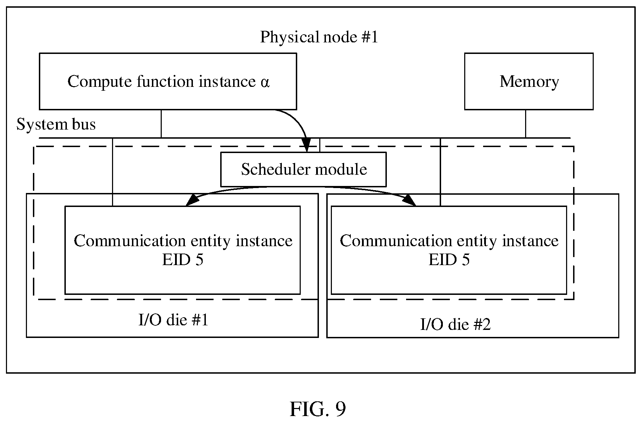

It should be noted that, when the physical node #1 aggregates a plurality of communication entity instances EID 5 located on at least two I/O dies into one virtual communication entity instance EID 5, an additional scheduler (scheduler) module is required for implementation. As shown in FIG. 9, the scheduler module is responsible for splitting one memory read/write operation instruction into a plurality of operation instructions (for example, splitting a read/write operation for a segment of continuous address space into a plurality of read/write operations for a smaller segment of continuous address space), and distributing the plurality of operation instructions obtained through splitting to different I/O dies for execution.

The scheduler module may be a functional module integrated in an I/O die, or may be a functional module independent of a plurality of I/O dies.

Network addresses of the I/O die #1 and the I/O die #2 of the physical node #1 are X, the I/O die #1 of the physical node #1 includes a port 1 (port 1) and a port 2, a network address of the port 1 is A, and a network address of the port 2 is B. The I/O die #2 of the physical node #1 includes a port 1 (port 1) and a port 2, a network address of the port 1 is C, and a network address of the port 2 is D. Network addresses of the I/O die #1 and the I/O die #2 of the physical node #2 are Y, the I/O die #1 of the physical node #2 includes a port 1 and a port 2, a network address of the port 1 is E, and a network address of the port 2 is F. The I/O die #2 of the physical node #2 includes a port 1 and a port 2, a network address of the port 1 is G, and a network address of the port 2 is H. The physical node #1 serves as a transmitter, and the physical node #2 serves as a receiver. One or more ports of the physical node #1 and one or more ports of the physical node #2 are connected to one or more switching planes. Each switching plane may include one or more switches. The transmitter can reach the I/O die at the receiver through any switching plane.

Further, the system administrator generates one destination table entry pointing to the EID 9 for the I/O die #1 of the physical node #1, and generates one default routing table entry; and the system administrator generates one destination table entry pointing to the EID 9 for the I/O die #2 of the physical node #1, and generates one default routing table entry, as shown in Table 1 and Table 2.

The system administrator creates a page table β of the compute instance β for the compute instance β on the physical node #2, and generates one page table entry item pointing to the EID 9 for each of the I/O die #1 and the I/O die #2 of the physical node #2, as shown in Table 3.

The system administrator generates routing table entries pointing to the network addresses D, E, X, and Y for a switch of a switching plane 1, generates routing table entries pointing to the network addresses C, F, X, and Y for a switch of a switching plane 2, generates routing table entries pointing to the network addresses B, G, X, and Y for a switch of a switching plane 3, and generates routing table entries pointing to the network addresses A, H, X, and Y for a switch of a switching plane 4.

For example, the communication entity instance EID 5 initiates a memory read/write operation to the communication entity instance EID 9. After the I/O die #1 and the I/O die #2 of the physical node #1 receive information about an operation instruction (if the operation instruction is a DMA operation, the information about the operation instruction includes but is not limited to a destination communication object identifier, an operation code, an I/O memory address, and a length; or if the operation instruction is a load/store operation, the information about the operation instruction includes an operation code, an HPA memory address, and a length; and the I/O die first queries a decoding table to find the destination communication object identifier and the I/O memory address based on an HPA), the I/O die #1 and the I/O die #2 of the physical node #1 each obtain the destination network address Y by querying the destination table via the destination communication entity instance identifier EID 9.

The I/O die #1 of the physical node #1 queries the routing table via the network address Y to hit the default routing entry, so as to obtain the port 1 and the port 2 in an output port list. The I/O die #1 of the physical node #1 performs slicing based on the information about the operation instruction to generate at least one slice, sends different slices from the selected port 1 or 2 according to a load balancing policy, and sends, to a link, a generated packet corresponding to each slice, where a destination network address of the packet carries Y, and a source network address of the packet carries A or B corresponding to a transmit port.

The I/O die #2 of the physical node #1 performs slicing based on the information about the operation instruction to generate at least one slice, sends different slices from the selected port 1 or 2 according to the load balancing policy, and sends, to a link, a generated packet corresponding to each slice, where a destination network address of the packet carries Y, and a source network address of the packet carries C or D corresponding to a transmit port.

The switch queries the routing table based on the destination network address carried in the packet for forwarding, and routes the packet to the I/O die #1 or the I/O die #2 of the physical node #2. After receiving the packet, the I/O die #1 or the I/O die #2 of the physical node #2 obtains the destination communication entity instance identifier EID 9 in the packet, queries the page table entry based on the EID 9 to obtain a memory address corresponding to the page table β, continues to query the page table β to obtain a physical address of a to-be-accessed memory space, and initiates a memory read/write operation via the physical address.

Optionally, in the scenario shown in FIG. 8, if the communication entity instance EID 9 is migrated from the physical node #2 to a physical node #3, and a network address of an I/O die of the physical node #3 is Z, the system administrator needs to refresh the destination table entry in the physical node #1, and update dstNA of the EID 9 to the network address Z of the I/O die of the physical node #3.

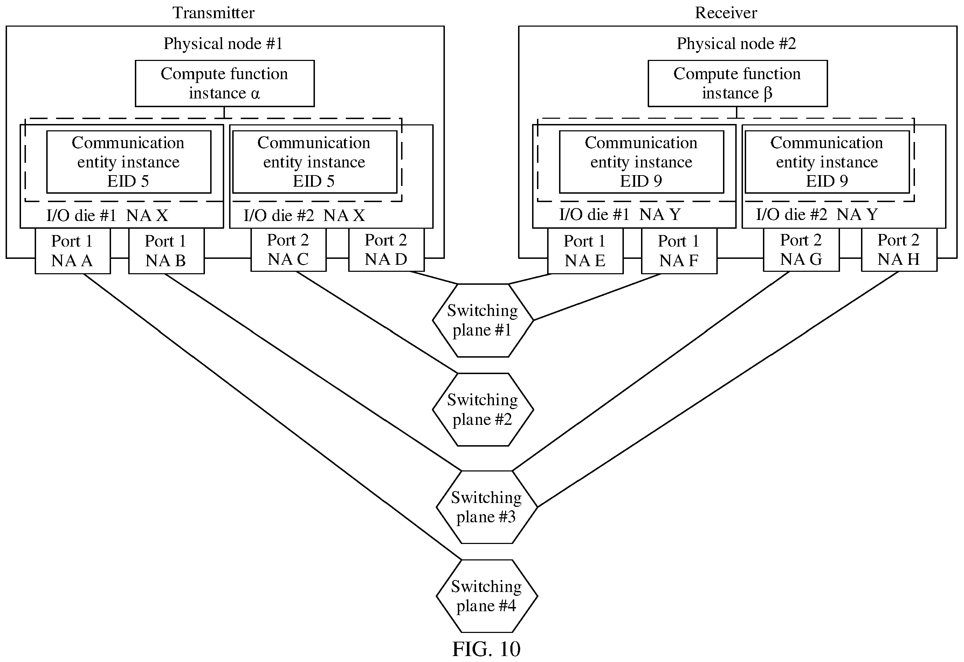

In addition, it should be noted that, as shown in FIG. 8, the one or more ports of the physical node #1 and the one or more ports of the physical node #2 are connected to the one or more switching planes, and the transmitter can reach the I/O die at the receiver through any switching plane. If the one or more ports of the physical node #1 and the one or more ports of the physical node #2 are connected to a plurality of switching planes, but the transmitter cannot reach the I/O die at the receiver through one switching plane (or a plurality of switching planes), as shown in FIG. 10, the transmitter cannot reach the I/O die at the receiver through the switching plane #2 and the switching plane #4.

In the scenario shown in FIG. 10, a difference from the scenario shown in FIG. 7 lies in that the I/O die #1 and the I/O die #2 of the physical node #1 need to support more routing table entries, the routing table is queried via the network address F to hit a corresponding routing entry, so as to obtain the output port with a higher probability, as shown in Table 5.

Example 3: The first physical node and the second physical node are physical nodes in a single I/O die form.

As shown in FIG. 6, the first physical node is a physical node #1, and the second physical node is a physical node #2. The physical node #1 includes a compute instance α, and the physical node #1 includes a compute instance β. The system administrator creates a communication entity instance EID 5 for the compute instance α on an I/O die of the physical node #1, and creates a communication entity instance EID 9 for the compute instance β on an I/O die of the physical node #2. A network address of the I/O die of the physical node #1 is E, the I/O die of the physical node #1 includes a port 1 (port 1) and a port 2, a network address of the port 1 is A, and a network address of the port 2 is B. A network address of the I/O die of the physical node #2 is F, the I/O die of the physical node #2 includes a port 1 and a port 2, a network address of the port 1 is C, and a network address of the port 2 is D. The physical node #1 serves as a transmitter, and the physical node #2 serves as a receiver. One or more ports of the physical node #1 and one or more ports of the physical node #2 are connected to one or more switching planes. Each switching plane may include one or more switches. The transmitter can reach the I/O die at the receiver through any switching plane.

The system administrator generates one destination table entry pointing to the EID 9 for the I/O die of the physical node #1, and generates two routing table entries whose destinations are the network addresses C and D respectively, as shown in Table 1b and Table 2b.

**Table 1b: Destination table**

| Identity (Key(dstEID)) of a destination communication entity instance | Network address value (value(dstNA)) |
|---|---|
| 9 | C and D |
| ... | |

**Table 2b: Routing table**

| Network address (key(dstNA)) | Output port list value (value(outport list)) |
|---|---|
| C | 2 |
| D | 1 |
| ... | |

The system administrator creates a page table β of the compute instance β for the compute instance β on the physical node #2, and generates one page table entry item pointing to the EID 9 for the I/O die of the physical node #2, as shown in Table 3.

The system administrator generates routing table entries pointing to the network addresses B and C for a switch of a switching plane 1, and generates routing table entries pointing to the network addresses A and D for a switch of a switching plane 2.

For example, the communication entity instance EID 5 initiates a memory read/write operation to the communication entity instance EID 9. After the I/O die of the physical node #1 receives information about an operation instruction (if the operation instruction is a DMA operation, the information about the operation instruction includes but is not limited to a destination communication object identifier, an operation code, an I/O memory address, and a length; or if the operation instruction is a load/store operation, the information about the operation instruction includes an operation code, an HPA memory address, and a length; and the I/O die first queries a decoding table to find the destination communication object identifier and the I/O memory address based on an HPA), the I/O die of the physical node #1 obtains two destination network addresses, which are C and D respectively, by querying the destination table via the destination communication entity instance identifier EID 9.

The I/O die of the physical node #1 performs slicing based on the information about the operation instruction to generate at least one slice, assigns the destination network address C or D to each slice according to a load balancing policy, obtains an output port/output port list by querying the routing table via the destination network address of the slice (if the output port list is obtained, an output port in the list is selected according to the load balancing policy), uses a network address of the output port as a source network address of the slice, and sends, to a link, a generated packet corresponding to each slice, where a destination network address of the packet carries D or C, and a source network address of the packet carries the network address A or B corresponding to the transmit port.

For example, a packet format is shown in Table 4b:

| | | | |
|---|---|---|---|
| Network addresses (for example, the destination network address D and the source network address A, or the destination network address C and the source network address B) | Communication objects (for example, the destination communication object EID 9 and the source communication object EID 5) | Operation and information | Data |

The switch queries the routing table based on the destination network address carried in the packet for forwarding, and routes the packet to the I/O die of the physical node #2. After receiving the packet, the I/O die of the physical node #2 queries a page table entry by using the destination communication object identifier EID 9 in the packet, to obtain the destination communication entity instance identifier EID 9 in the packet, queries the page table entry based on the EID 9 to obtain a memory address corresponding to the page table β, continues to query the page table β to obtain a physical address of a to-be-accessed memory space, and initiates a memory read/write operation via the physical address.

Optionally, in the scenario shown in FIG. 6, if the communication entity instance EID 9 is migrated from the physical node #2 to a physical node #3, and network addresses of ports of an I/O die of the physical node #3 are E and F, the system administrator needs to refresh destination table entries in the physical node #1, update a dstNA list of the EID 9 to the network addresses E and F of the ports of the physical node 3, and add routing table entries corresponding to E and F.

Example 4: The first physical node and the second physical node are physical nodes in a multi-I/O die form.

As shown in FIG. 8, the first physical node is a physical node #1, and the second physical node is a physical node #2. The physical node #1 includes a compute instance α, and the physical node #1 includes a compute instance β. The system administrator creates a communication entity instance EID 5 for the compute instance α on an I/O die#1 of the physical node #1, and also creates a communication entity instance EID 5 for the compute instance α on an I/O die#2 of the physical node #1; and creates a communication entity instance EID 9 for the compute instance β on an I/O die #1 of the physical node #2, and also creates a communication entity instance EID 9 for the compute instance β on an I/O die #2 of the physical node #2.

Specifically, the communication entity instance EID 5 located on the I/O die #1 of the physical node #1 and the communication entity instance EID 5 located on the I/O die #2 of the physical node #1 are aggregated into one virtual communication entity instance EID 5 and presented to the compute instance α for use; and the communication entity instance EID 9 located on the I/O die #1 of the physical node #2 and the communication entity instance EID 9 located on the I/O die #2 of the physical node #2 are aggregated into one virtual communication entity instance EID 9 and presented to the compute instance β for use.

It should be noted that, when the physical node #1 aggregates a plurality of communication entity instances EID 5 located on at least two I/O dies into one virtual communication entity instance EID 5, an additional scheduler (scheduler) module is required for implementation. As shown in FIG. 9, the scheduler module is responsible for splitting one memory read/write operation instruction into a plurality of operation instructions (for example, splitting a read/write operation for a segment of continuous address space into a plurality of read/write operations for a smaller segment of continuous address space), and distributing the plurality of operation instructions obtained through splitting to different I/O dies for execution.

The scheduler module may be a functional module integrated in an I/O die, or may be a functional module independent of a plurality of I/O dies.

The I/O die #1 of the physical node #1 includes a port 1 (port 1) and a port 2, a network address of the port 1 is A, and a network address of the port 2 is B. The I/O die #2 of the physical node #1 includes a port 1 (port 1) and a port 2, a network address of the port 1 is C, and a network address of the port 2 is D. The I/O die #1 of the physical node #2 includes a port 1 and a port 2, a network address of the port 1 is E, and a network address of the port 2 is F. The I/O die #2 of the physical node #2 includes a port 1 and a port 2, a network address of the port 1 is G, and a network address of the port 2 is H. The physical node #1 serves as a transmitter, and the physical node #2 serves as a receiver. One or more ports of the physical node #1 and one or more ports of the physical node #2 are connected to one or more switching planes. Each switching plane may include one or more switches. The transmitter can reach the I/O die at the receiver through any switching plane.

It should be noted that, in Example 3 and Example 4, a network address carried in a packet is a network address of a port. Therefore, in Example 3 and Example 4, the I/O die may not need to be configured with the network address.

Further, the system administrator generates one destination table entry pointing to the EID 9 for the I/O die #1 of the physical node #1, and generates two routing table entries whose destinations are the network addresses G and H respectively. In addition, the system administrator generates one destination table entry pointing to the EID 9 for the I/O die #2 of the physical node #1, and generates two routing table entries whose destinations are the network addresses E and F respectively. Similar to Table 1b and Table 2b, details are not described herein again.

The system administrator creates a page table β of the compute instance β for the compute instance β on the physical node #2, and generates one page table entry item pointing to the EID 9 for each of the I/O die #1 and the I/O die #2 of the physical node #2, as shown in Table 3.

The system administrator generates routing table entries pointing to the network addresses D and E for a switch of a switching plane 1, generates routing table entries pointing to the network addresses C and F for a switch of a switching plane 2, generates routing table entries pointing to the network addresses B and G for a switch of a switching plane 3, and generates routing table entries pointing to the network addresses A and H for a switch of a switching plane 4.

For example, the communication entity instance EID 5 initiates a memory read/write operation to the communication entity instance EID 9. After the I/O die #1 and the I/O die #2 of the physical node #1 receive information about an operation instruction (if the operation instruction is a DMA operation, the information about the operation instruction includes but is not limited to a destination communication object identifier, an operation code, an I/O memory address, and a length; or if the operation instruction is a load/store operation, the information about the operation instruction includes an operation code, an HPA memory address, and a length; and the I/O die first queries a decoding table to find the destination communication object identifier and the I/O memory address based on an HPA), the I/O die #1 and the I/O die #2 of the physical node #1 each obtain two destination network addresses, which are G and H, and E and F respectively, by querying the destination table via the destination communication entity instance identifier EID 9.

The I/O die #1 and the I/O die #2 of the physical node #1 each perform slicing based on the information about the operation instruction to generate at least one slice, assign the destination network address G, H, E, or F to each slice according to a load balancing policy, obtain an output port/output port list by querying the routing table via the destination network address of the slice (if the output port list is obtained, an output port in the list is selected according to the load balancing policy), use a network address of the output port as a source network address of the slice, and send, to a link, a generated packet corresponding to each slice.

The switch queries the routing table based on the destination network address carried in the packet for forwarding, and routes the packet to the I/O die #1 or the I/O die #2 of the physical node #2. After receiving the packet, the I/O die #1 or the I/O die #2 of the physical node #2 obtains the destination communication entity instance identifier EID 9 in the packet, queries a page table entry based on the EID 9 to obtain a memory address corresponding to the page table β, continues to query the page table β to obtain a physical address of a to-be-accessed memory space, and initiates a memory read/write operation via the physical address.

Optionally, in the scenario shown in FIG. 8, if the communication entity instance EID 9 is migrated from the physical node #2 to a physical node #3, and network addresses of ports of an I/O die of the physical node #3 are I, J, K, and L, the system administrator needs to refresh the destination table entry in the physical node #1, update a dstNA list of the EID 9 to the network addresses I, J, K, and L of the ports of the physical node 3, and add routing table entries corresponding to I, J, K, and L.

It should be understood that the specific examples shown in FIG. 5 in embodiments of this application are merely intended to help a person skilled in the art better understand embodiments of this application, but not to limit the scope of embodiments of this application. It should be further understood that sequence numbers of the foregoing processes do not mean a sequence of performing the processes. The sequence of performing the processes should be determined based on functions and internal logic of the processes, and should not be construed as any limitation on the implementation processes in embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing mainly describes the solutions provided in embodiments of this application from the perspective of the methods. To implement the foregoing functions, corresponding hardware structures and/or software modules for performing the functions are included. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

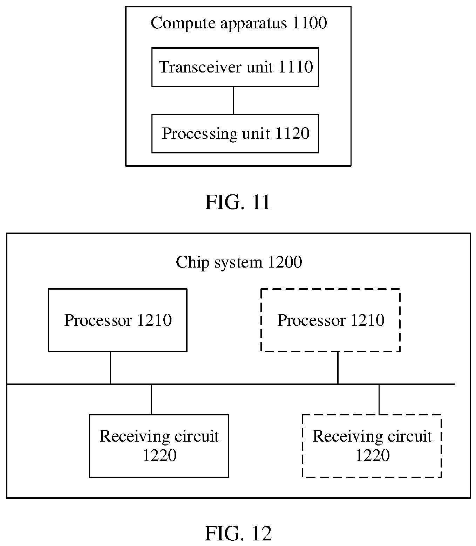

The following describes in detail the compute apparatuses provided in embodiments of this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, some content is not described again.

In embodiments of this application, the first physical node or the second physical node may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, division into modules is an example, and is merely logical function division. In actual implementation, another division manner may be used. An example in which the functional modules are obtained through division based on the corresponding functions is used below for description.

FIG. 11 is a diagram of a structure of a compute apparatus 1000 according to an embodiment of this application.

In an example, the compute apparatus 1100 may be used in a first physical node, and the compute apparatus 1000 may be configured to perform the foregoing communication method, for example, configured to perform the method shown in FIG. 5. Specifically, the compute apparatus 1100 may include a transceiver unit 1110 and a processing unit 1120.

The transceiver unit 1010 is configured to receive a first operation instruction, where the first operation instruction instructs to access a memory of a second compute instance in a second physical node, the second physical node includes a second processing unit and a second I/O die, the second processing unit is configured to create the second compute instance, and the second I/O die is configured to create a second communication entity instance for the second compute instance. An identifier of a first communication entity instance is a first entity identifier EID, a first I/O die includes at least one first port, the at least one first port respectively corresponds to at least one first network address, an identifier of the second communication entity instance is a second EID, the second I/O die includes at least one second port, the at least one second port respectively corresponds to at least one second network address, the second I/O die corresponds to a third network address, the first I/O die corresponds to a fourth network address, and the at least one first port and the at least one second port are connected to at least one switching plane. The processing unit 1120 is configured to generate at least one first packet according to the first operation instruction, where the at least one first packet is sent to the second physical node through the at least one switching plane, and the first EID, the at least one first network address, the second EID, the at least one second network address, the third network address, and the fourth network address are used to determine a transmission path of the at least one first packet.

For example, with reference to FIG. 5, the transceiver unit 1010 may be configured to perform S510 and S520, and the processing unit 1020 may be configured to perform S510 and S520.

It should be noted that the apparatus in FIG. 11 may also be configured to perform method steps in variations of embodiments shown in the foregoing accompanying drawings. Details are not described herein again.

In another example, the compute apparatus 1100 may be used in a second physical node, and the compute apparatus 1100 may be configured to perform the foregoing communication method, for example, configured to perform the method shown in FIG. 5.

The transceiver unit 1010 is configured to receive at least one first packet from a first physical node, where the at least one first packet is used to access a memory of a second compute instance, the first physical node includes a first processing unit and a first input/output I/O die, the first processing unit is configured to create a first compute instance, and the first I/O die is configured to create a first communication entity instance for the first compute instance. An identifier of the first communication entity instance is a first entity identifier EID, the first I/O die includes at least one first port, the at least one first port respectively corresponds to at least one first network address, an identifier of a second communication entity instance is a second EID, a second I/O die includes at least one second port, the at least one second port respectively corresponds to at least one second network address, the second I/O die corresponds to a third network address, the first I/O die corresponds to a fourth network address, and the at least one first port and the at least one second port are connected to at least one switching plane. The processing unit 1120 is configured to access the memory of the second compute instance in response to the at least one first packet, where one or more of the first EID, the at least one first network address, the second EID, the at least one second network address, the third network address, and the fourth network address are used to determine a transmission path of the at least one first packet.

For example, with reference to FIG. 5, the transceiver unit 1010 may be configured to perform S530.

It should be noted that the apparatus in FIG. 11 may also be configured to perform method steps in variations of embodiments shown in the foregoing accompanying drawings. Details are not described herein again.

An embodiment of this application further provides a chip system 1200. As shown in FIG. 12, the chip system 1200 includes at least one processor and at least one interface circuit. For example, when the chip system 1200 includes one processor and one interface circuit, the processor may be a processor 1210 shown in a solid-line box (or a processor 1210 shown in a dashed-line box) in FIG. 12, and the interface circuit may be an interface circuit 1220 shown in a solid-line box (or an interface circuit 1220 shown in a dashed-line box) in FIG. 12.

When the chip system 1200 includes two processors and two interface circuits, the two processors include a processor 1210 shown in a solid-line box and a processor 1210 shown in a dashed-line box in FIG. 12, and the two interface circuits include an interface circuit 1220 shown in a solid-line box and an interface circuit 1220 shown in a dashed-line box in FIG. 12. This is not limited. The processor 1210 and the interface circuit 1220 may be interconnected through a line. For example, the interface circuit 1220 may be configured to receive a signal (for example, instructions stored in a memory). For another example, the interface circuit 1220 may be configured to send a signal to another apparatus (for example, the processor 1210).

For example, the interface circuit 1220 may read the instructions stored in the memory, and send the instructions to the processor 1210. When the instructions are executed by the processor 1210, a compute apparatus is caused to perform the steps in the foregoing embodiments. Certainly, the chip system 1200 may further include another discrete device. This is not specifically limited in embodiments of this application.

Another embodiment of this application further provides a computer-readable storage medium. The computer-readable storage medium stores instructions. When the instructions are run on a compute apparatus, the compute apparatus performs the steps performed by the compute apparatus in the method procedures shown in the foregoing method embodiments. In some embodiments, the disclosed methods may be implemented as computer program instructions encoded in a machine-readable format on the computer-readable storage medium or encoded on another non-transitory medium or product.

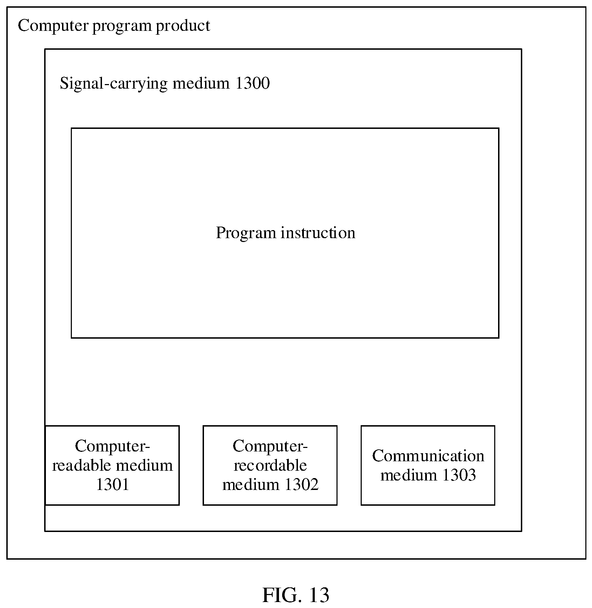

FIG. 13 schematically shows a conceptual partial view of a computer program product according to an embodiment of this application. The computer program product includes a computer program for executing a computer process on a computer device.

In an embodiment, the computer program product is provided by using a signal-carrying medium 1300. The signal-carrying medium 1300 may include one or more program instructions. When the one or more program instructions are run by one or more processors, the functions or some of the functions described in FIG. 5 may be provided. Therefore, for example, one or more features of S510 to S540 in FIG. 5 may be borne by one or more instructions associated with the signal-carrying medium 1300. In addition, the program instructions in FIG. 13 are also described as example instructions.

In some examples, the signal-carrying medium 1300 may include a computer-readable medium 1301, for example, but not limited to, a hard disk drive, a compact disc (CD), a digital video disc (DVD), a digital tape, a memory, a read-only memory (read-only memory, ROM), or a random access memory (random access memory, RAM).

In some implementations, the signal-carrying medium 1300 may include a computer-recordable medium 1302, for example, but not limited to, a memory, a read/write (R/W) CD, or an R/W DVD.

In some implementations, the signal-carrying medium 1300 may include a communication medium 1303, for example, but not limited to, a digital and/or analog communication medium (for example, an optical fiber, a waveguide, a wired communication link, or a wireless communication link). The signal-carrying medium 1300 may be transmitted by a wireless communication medium 1303. The one or more program instructions may be, for example, computer-executable instructions or logic implementation instructions.

In some examples, various operations, functions, or actions are provided in response to one or more program instructions in the computer-readable medium 1301, the computer-recordable medium 1302, and/or the communication medium 1303.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first physical node, wherein the first physical node comprises a first processing unit and a first input/output I/O die, the first processing unit is configured to create a first compute instance, and the first I/O die is configured to create a first communication entity instance for the first compute instance; and the method comprises:
receiving, by the first I/O die, a first operation instruction, wherein the first operation instruction instructs to access a memory of a second compute instance in a second physical node, the second physical node comprises a second processing unit and a second I/O die, the second processing unit is configured to create a second compute instance, and the second I/O die is configured to create a second communication entity instance for the second compute instance, wherein
an identifier of the first communication entity instance is a first entity identifier EID, the first I/O die comprises at least one first port, the at least one first port respectively corresponds to at least one first network address, an identifier of the second communication entity instance is a second EID, the second I/O die comprises at least one second port, the at least one second port respectively corresponds to at least one second network address, the second I/O die corresponds to a third network address, the first I/O die corresponds to a fourth network address, and the at least one first port and the at least one second port are connected to at least one switching plane; and
generating, by the first I/O die, at least one first packet according to the first operation instruction, wherein the at least one first packet is sent to the second physical node through the at least one switching plane, and the first EID, the at least one first network address, the second EID, the at least one second network address, the third network address, and the fourth network address are used to determine a transmission path of the at least one first packet.

2. The method according to claim 1, wherein the first physical node further comprises a third I/O die, the third I/O die corresponds to the fourth network address, the third I/O die is configured to create a third communication entity instance for the first compute instance, an identifier of the third communication entity instance is the first EID, the third I/O die comprises at least one third port, and the at least one third port respectively corresponds to at least one fifth network address; and the method further comprises:
receiving, by the third I/O die, a second operation instruction, wherein the second operation instruction instructs to access the memory of the second compute instance; and
generating, by the third I/O die, at least one second packet according to the second operation instruction, wherein the at least one third port is connected to the at least one switching plane, the at least one second packet is sent to the second physical node through the at least one switching plane, and the first EID, the at least one first network address, the second EID, the at least one second network address, the at least one fifth network address, the third network address, and the fourth network address are used to determine a transmission path of the at least one second packet and the transmission path of the at least one first packet.

3. The method according to claim 2, wherein the first physical node further comprises a scheduler module, and the method further comprises:
splitting, by the scheduler module, an operation instruction into the first operation instruction and the second operation instruction; and
sending, by the scheduler module, the first operation instruction to the first I/O die, and sending the second operation instruction to the third I/O die.

4. The method according to any one of claims 1 to 3, wherein the second physical node further comprises a fourth I/O die, the fourth I/O die corresponds to the third network address, the fourth I/O die is configured to create a fourth communication entity instance for the second compute instance, an identifier of the fourth communication entity instance is the second EID, the fourth I/O die comprises at least one fourth port, the at least one fourth port respectively corresponds to at least one sixth network address, and the at least one fourth port is connected to the at least one switching plane; and
the first EID, the at least one first network address, the second EID, the at least one second network address, the at least one fifth network address, the at least one sixth network address, the third network address, and the fourth network address are used to determine a transmission path of a packet.

5. The method according to claim 2, wherein a destination table and a first routing table are configured for the first I/O die, the destination table comprises a first destination table entry, the first destination table entry comprises the second EID and the third network address corresponding to the second EID, the first routing table comprises a first default routing table entry, and the first default routing table entry indicates the at least one first port of the first I/O die; and
the destination table and a third routing table are configured for the third I/O die, the third routing table comprises a third default routing table entry, and the third default routing table entry indicates the at least one third port of the third I/O die.

6. The method according to claim 5, wherein if the at least one switching plane comprises a plurality of switching planes and the first physical node is incapable of transmitting a packet to the second physical node through a first switching plane among the plurality of switching planes, the first routing table further comprises a first routing table entry, wherein the first routing table entry comprises the third network address and a first port corresponding to the third network address, the third routing table further comprises a third routing table entry, and the third routing table entry comprises the third network address and a third port corresponding to the third network address;
the first port corresponding to the third network address is a port, among the at least one first port of the first I/O die, that is usable to transmit a packet to the second physical node through a switching plane other than the first switching plane among the plurality of switching planes; and
the third port corresponding to the third network address is a port, among the at least one third port of the third I/O die, that is usable to transmit a packet to the second physical node through the switching plane other than the first switching plane among the plurality of switching planes.

7. The method according to claim 5 or 6, wherein an identifier of a destination communication entity instance of the first operation instruction is the second EID, and the method further comprises:
determining, by the first I/O die and the third I/O die by querying the destination table based on the second EID, that a destination network address is the third network address;
determining, by the first I/O die by querying the first routing table based on the third network address, the at least one first port for sending the at least one first packet; and
determining, by the third I/O die by querying the third routing table based on the third network address, the at least one third port for sending the at least one second packet.

8. The method according to claim 7, wherein the method further comprises:
determining, by the first I/O die based on a load status of the at least one first port, to transmit the at least one first packet through a part or all of the at least one first port; and
determining, by the third I/O die based on a load status of the at least one third port, to transmit the at least one second packet through a part or all of the at least one third port.

9. The method according to any one of claims 5 to 8, wherein when the second compute instance is migrated to a third physical node, the first destination table entry is updated to a second destination table entry, wherein the second destination table entry comprises the second EID and a seventh network address corresponding to the second EID, and the seventh network address is a network address allocated to an I/O die on the third physical node.

10. The method according to claim 4, wherein a destination table and a first routing table are configured for the first I/O die, the destination table comprises a first destination table entry, the first destination table entry comprises the second EID and the at least one second network address corresponding to the second EID and/or the at least one sixth network address corresponding to the second EID, the first routing table comprises at least one second routing table entry, the at least one second routing table entry corresponds to the at least one second port of the second I/O die and/or the at least one fourth port of the fourth I/O die, and each second routing table entry comprises a second network address of a corresponding second port and/or a sixth network address of a corresponding fourth port and identifiers of one or more first ports in the at least one first port; and
the destination table and a third routing table are configured for the third I/O die, the third routing table comprises at least one fourth routing table entry, the at least one fourth routing table entry corresponds to the at least one second port of the second I/O die and/or the at least one fourth port of the fourth I/O die, and each fourth routing table entry comprises a second network address of a corresponding second port and/or a sixth network address of a corresponding fourth port and identifiers of one or more third ports in the at least one third port.

11. The method according to claim 10, wherein identifiers of destination communication entity instances of the first operation instruction and the second operation instruction are the second EID, and the method further comprises:
determining, by the first I/O die and the third I/O die by querying the destination table based on the second EID, that a destination network address is a second network address of the at least one second port of the second I/O die and/or a sixth network address of the at least one fourth port of the fourth I/O die; and
determining, by the first I/O die by querying the first routing table based on the second network address of the at least one second port and/or the sixth network address of the at least one fourth port, the at least one first port for sending the at least one first packet; and determining, by the third I/O die by querying the third routing table based on the second network address of the at least one second port and/or the sixth network address of the at least one fourth port, the at least one third port for sending the at least one second packet.

12. The method according to claim 11, wherein the method further comprises:
determining, by the first I/O die and the third I/O die based on a quantity of second network addresses and/or a quantity of sixth network addresses in the destination table, to transmit a packet through a part or all of the at least one second port of the second I/O die and/or the at least one fourth port of the fourth I/O die; and
determining, by the first I/O die based on a load status of the at least one first port, to transmit the at least one first packet through a part or all of the at least one first port; and determining, by the third I/O die based on a load status of the at least one third port, to transmit the at least one second packet through a part or all of the at least one third port.

13. The method according to any one of claims 10 to 12, wherein when the second compute instance is migrated to a third physical node, the first destination table entry is updated to a second destination table entry, wherein a second network address and/or a sixth network address in each second routing table entry and the second network address and/or the sixth network address in the fourth routing table entry are updated to network addresses allocated to a port of an I/O die on the third physical node, the second destination table entry comprises the second EID and an eighth network address corresponding to the second EID, and the eighth network address is a network address allocated to the port of the I/O die on the third physical node.

14. A communication method, applied to a second physical node, wherein the second physical node comprises a second processing unit and a second input/output I/O die, the second processing unit is configured to create a second compute instance, and the second I/O die is configured to create a second communication entity instance for the second compute instance; and the method comprises:
receiving, by the second I/O die, at least one first packet from a first physical node, wherein the at least one first packet is used to access a memory of the second compute instance, the first physical node comprises a first processing unit and a first input/output I/O die, the first processing unit is configured to create a first compute instance, and the first I/O die is configured to create a first communication entity instance for the first compute instance, wherein
an identifier of the first communication entity instance is a first entity identifier EID, the first I/O die comprises at least one first port, the at least one first port respectively corresponds to at least one first network address, an identifier of the second communication entity instance is a second EID, the second I/O die comprises at least one second port, the at least one second port respectively corresponds to at least one second network address, the second I/O die corresponds to a third network address, the first I/O die corresponds to a fourth network address, and the at least one first port and the at least one second port are connected to at least one switching plane; and
accessing, by the second I/O die, the memory of the second compute instance in response to the at least one first packet, wherein one or more of the first EID, the at least one first network address, the second EID, the at least one second network address, the third network address, and the fourth network address are used to determine a transmission path of the at least one first packet.

15. The method according to claim 14, wherein the first physical node further comprises a third I/O die, the third I/O die corresponds to the fourth network address, the third I/O die is configured to create a third communication entity instance for the first compute instance, an identifier of the third communication entity instance is the first EID, the third I/O die comprises at least one third port, and the at least one third port respectively corresponds to at least one fifth network address; and the method further comprises:
receiving, by the second I/O die, at least one second packet from the first physical node, wherein the at least one second packet is used to access the memory of the second compute instance, and the first EID, the at least one first network address, the second EID, the at least one second network address, the at least one fifth network address, the third network address, and the fourth network address are used to determine a transmission path of the at least one second packet and the transmission path of the at least one first packet.

16. The method according to claim 14 or 15, wherein the second physical node further comprises a fourth I/O die, the fourth I/O die corresponds to the third network address, the fourth I/O die is configured to create a fourth communication entity instance for the second compute instance, an identifier of the fourth communication entity instance is the second EID, the fourth I/O die comprises at least one fourth port, the at least one fourth port respectively corresponds to at least one sixth network address, and the at least one fourth port is connected to the at least one switching plane; and
the first EID, the at least one first network address, the second EID, the at least one second network address, the at least one fifth network address, the at least one sixth network address, the third network address, and the fourth network address are used to determine a transmission path of a packet.

17. The method according to claim 16, wherein a first page table is configured for the second compute instance, page table entries are configured for the second I/O die and the fourth I/O die, the page table entry comprises a first page table entry item, and the first page table entry item comprises the second EID and a start address of the first page table corresponding to the second EID.

18. The method according to claim 17, wherein identifiers of destination communication entity instances of the at least one first packet and the at least one second packet are the second EID, and the second I/O die and the fourth I/O die accessing the memory of the second compute instance in response to the at least one first packet and the at least one second packet comprises:
determining, by the second I/O die and the fourth I/O die by querying the page table entry based on the identifiers of the destination communication entity instances of the at least one first packet and the at least one second packet, the start address of the first page table; and
determining, by the second I/O die and the fourth I/O die by querying the first page table based on the start address of the first page table, a physical address of a to-be-accessed memory space, and initiating a memory read or write operation via the physical address.

19. A communication method, applied to a computing system comprising a first physical node and a second physical node, wherein the first physical node comprises a first processing unit and a first input/output I/O die, the first processing unit is configured to create a first compute instance, the first I/O die is configured to create a first communication entity instance for the first compute instance, the second physical node comprises a second processing unit and a second I/O die, the second processing unit is configured to create a second compute instance, the second I/O die is configured to create a second communication entity instance for the second compute instance, an identifier of the first communication entity instance is a first entity identifier EID, the first I/O die comprises at least one first port, the at least one first port respectively corresponds to at least one first network address, an identifier of the second communication entity instance is a second EID, the second I/O die comprises at least one second port, the at least one second port respectively corresponds to at least one second network address, the second I/O die corresponds to a third network address, the first I/O die corresponds to a fourth network address, and the at least one first port and the at least one second port are connected to at least one switching plane; and the method comprises:
receiving, by the first I/O die, a first operation instruction, wherein the first operation instruction instructs to access a memory of the second compute instance in the second physical node;
generating, by the first I/O die, at least one first packet according to the first operation instruction, wherein the at least one first packet is sent to the second physical node through the at least one switching plane, and the first EID, the at least one first network address, the second EID, the at least one second network address, the third network address, and the fourth network address are used to determine a transmission path of the at least one first packet;
receiving, by the second I/O die, the at least one first packet from the first physical node, wherein the at least one first packet is used to access the memory of the second compute instance; and
accessing, by the second I/O die, the memory of the second compute instance in response to the at least one first packet.

20. A computing system, comprising a first physical node and a second physical node, wherein the first physical node implements the method according to any one of claims 1 to 13, and the second physical node implements the method according to any one of claims 14 to 18.

21. A compute apparatus, comprising a processor configured to read instructions stored in a memory, wherein when the processor executes the instructions, the compute apparatus is caused to implement the method according to any one of claims 1 to 13 or the method according to any one of claims 14 to 18.

22. A computer program product, wherein the computer program product comprises computer program code; and when the computer program code is run on a computer, the method according to any one of claims 1 to 13 is performed; or when the computer program code is run on a computer, the method according to any one of claims 14 to 18 is performed.

23. A computer-readable storage medium, comprising a computer program, wherein when the computer program is run on a computer system, a processing module in the computer system is caused to perform the method according to any one of claims 1 to 13; or when the computer program is run on a computer system, a processing module in the computer system is caused to perform the method according to any one of claims 14 to 18.
